# FASCICULE DE BREVET EUROPEEN

(11) **EP 3 010 175 B1**
(45) Date de publication et mention de la délivrance du brevet: **10.04.2019**
(21) Numéro de dépôt: 15189420.1
(22) Date de dépôt: 12.10.2015
(51) Int. Cl.: H04L 9/12, H04L 9/32

(54) **REJEU D'UN BATCH DE COMMANDES SÉCURISEES DANS UN CANAL SÉCURISÉ**
WIEDERGABE EINES BATCHS VON GESICHERTEN STEUERBEFEHLEN IN EINEM GESICHERTEN KANAL
REPLAY OF A BATCH OF SECURE COMMANDS IN A SECURE CHANNEL

(30) Priorité: 13.10.2014 FR 1459800
(43) Date de publication de la demande: 20.04.2016
(73) Titulaire: IDEMIA France, 92400 Courbevoie (FR)
(72) Inventeur: VALLIERES, Jean-Philippe, 92700 COLOMBES (FR); NEROT, Sébastien, 92700 COLOMBES (FR)
(74) Mandataire: Santarelli

(56) Documents cités:
- US-A1- 2004 148 502
- US-A1- 2012 159 502

## Description

### DOMAINE DE L'INVENTION

La présente invention concerne le domaine des communications et plus particulièrement celui des communications entre un dispositif maître, par exemple un serveur, et un dispositif esclave, par exemple un client.

### CONTEXTE DE L'INVENTION

Deux entités communicantes définissent une couche de communication pour échanger des messages. Cette couche de communication est souvent définie à l'aide d'un protocole dit de canal sécurisé (ou « *Secure Channel* » selon la terminologie anglo-saxonne), permettant d'offrir différents niveaux de protection des communications et des données, par exemple en termes d'authentification des entités, d'intégrité des données et de confidentialité.

Un tel protocole est largement utilisé dans l'industrie des cartes à puce pour échanger des données selon une relation maître-esclave. Le maître initie le canal de communication puis la communication par l'envoi de commandes à l'esclave, l'esclave ne faisant qu'y répondre.

A titre illustratif, la carte à puce, et de façon générale tout élément sécurisé (SE pour « *Secure Element* »), carte à circuit intégré (ICC pour « *Integrated Circuit Card* »), universelle (UICC) voire embarquée (eUICC), peut officier comme esclave, par exemple en mode « serveur » dans un contexte client/serveur. Un équipement distant peut jouer le rôle de maître et donc de « client » dans un contexte client/serveur.

Pour atteindre un niveau de sécurité élevé, les protocoles de canal sécurisé mettent en oeuvre des mécanismes de sécurité qui s'appuient sur une ou plusieurs variables dynamiques, c'est-à-dire sur des variables qui évoluent dans le temps.

Les commandes et messages échangés entre le maître et l'esclave sont alors générés à partir de cette ou ces variables dynamiques, éventuellement via des clés de session, empêchant ainsi de les rejouer si les variables dynamiques (et donc les clés de session dans l'exemple) ont évolué.

Par exemple, ces variables dynamiques peuvent inclure des aléas échangés entre le maître et l'esclave dans un processus d'authentification (type *challenge-response*), et/ou inclure un compteur de séquence qui est incrémenté à chaque nouvel établissement d'un canal sécurisé entre les deux entités. C'est par exemple le cas dans les protocoles SCP02 et SCP03 (pour « *Secure Channel Protocol* » 02 et 03) largement utilisés dans l'industrie des cartes à puce et définis dans la norme GlobalPlatform.

Dans ces protocoles, les variables dynamiques sont utilisées pour générer une ou plusieurs clés de session utilisées pour authentifier et/ou chiffrer les données échangées et pour générer un code d'authentification de message (ou MAC pour « *Message Authentication Code* »). Les commandes sont ainsi sécurisées ou protégées.

Dans nombre de ces protocoles de canal sécurisé, les différentes commandes sécurisées envoyées par le maître (idem pour les réponses sécurisées envoyées par l'esclave) sont chaînées de sorte que la génération de la commande (de la réponse) N+1 nécessite que la précédente commande (réponse) N soit valide.

Par exemple, le code d'authentification d'un message (commande ou réponse) peut être de type CBC-MAC (pour « *Chained Block Ciffering* ») dans lequel la valeur d'initialisation est le CBC-MAC du message précédent.

De même, le chiffrement CBC des données peut faire intervenir un compteur interne qui est incrémenté pour chaque nouvelle commande, de sorte que, dans un même canal sécurisé, les commandes sécurisées sont différentes même si les données qu'elles contiennent sont les mêmes.

L'objectif du chaînage est d'assurer que les commandes (réponses) sécurisées sont envoyées et traitées dans un ordre prévu. Il permet également une détection plus facile de commandes (réponses) non prévue (par exemple une commande de réinitialisation), par exemple envoyées par une personne malveillante.

Les explications ci-dessous s'appuient principalement sur des exemples dans lesquels les commandes sont chaînées. Toutefois, la présente invention n'est pas limitée à de telles commandes chaînées.

Certains des protocoles de canal sécurisé permettent de pré-générer des commandes sécurisées, sans nécessiter à ce stade des commandes ou réponses précédentes. Pour ce faire, l'entité en question, généralement le maître, dispose de mécanismes lui permettant de prédire (ou simuler ou reproduire) le comportement de l'autre entité, ici l'esclave, notamment l'évolution des variables dynamiques et les réponses que l'esclave devrait générer. On parle d'un mode prédictif du protocole de canal sécurisé.

Par exemple, les données nécessaires au mode prédictif peuvent comprendre une ou des clés secrètes partagées entre le maître et l'esclave, à partir desquelles les clés de session sont générées ; les variables dynamiques, typiquement un compteur de séquence incrémenté pour chaque nouvel établissement d'un canal sécurisé, permettant également de générer les clés de session ; également les algorithmes permettant de prédire (ou pré-générer) des valeurs pseudo-aléatoires utilisées lors des échanges d'authentification (*challenge-response*)*.*

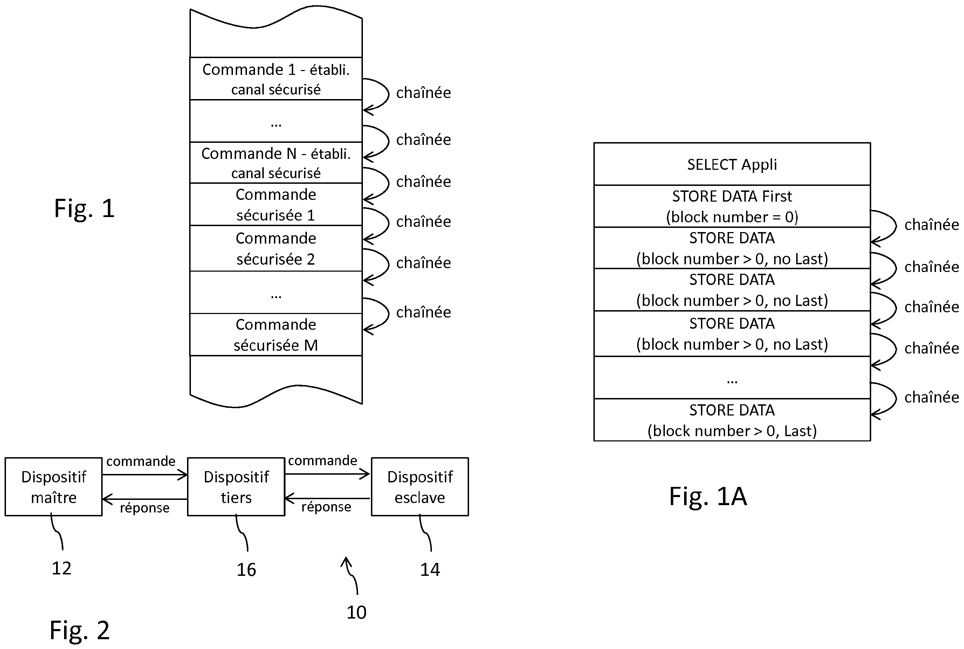

Le mode prédictif est souvent utilisé par le dispositif maître pour pré-générer un lot (ou jeu ou ensemble ou série) de commandes sécurisées, généralement chaînées, qui sont empaquetées dans un fichier ou « script » ou « batch » comme montré sur la **Figure 1****.** Dans le lot de cette figure, la première commande permettent d'initier et d'établir un canal sécurisé, la commande suivante, qui est sécurisée, contribue à un mécanisme d'authentification, puis les autres commandes sécurisées visent à piloter des traitements particuliers au sein du dispositif esclave.

La **Figure 1A** montre un autre exemple de lot de commandes sécurisées sans processus d'authentification. La commande SELECT APPLICATION est optionnelle car elle peut être réalisée de façon décorrelée, avant le lot des commandes sécurisées STORE DATA. En outre, elle ne comporte aucune indication sur une éventuelle sécurisation du canal de communication.

Ainsi la première commande sécurisée STORE DATA (identifiable grâce au numéro de bloc = 0 contenu dans le paramètre P2) est la première commande indiquant l'établissement d'un canal sécurisé, car son champs CLA contient une indication qu'elle est sécurisée.

Les autres commandes STORE DATA sont également sécurisées et chaînées.

En pratique, on fait appel aux scripts de commandes lorsque les dispositifs maître et esclave sont relativement distants et qu'une ou plusieurs entités intermédiaires, ou dispositifs tiers, s'intercalent entre eux, comme montré sur la **Figure 2****.** Ainsi, un dispositif tiers en lien direct (mettant par exemple en oeuvre le protocole SSL - pour « *Secure Sockets Layer* » ou couche de prises sécurisées) avec le dispositif esclave interagit avec ce dernier pour le compte du dispositif maître.

A titre d'exemple, le dispositif tiers peut être une application (et/ou système) mise en oeuvre dans un terminal dans lequel est embarqué le dispositif esclave (SE, UICC, etc.), notamment une midlet (application) chargée de réveiller le dispositif esclave avant de communiquer avec lui. En variante, le dispositif tiers peut être une machine quelconque dans un réseau de communication, c'est-à-dire un intermédiaire de transport.

Le dispositif tiers n'est pas nécessairement un dispositif de confiance. Notamment, il ne dispose pas des données assurant la protection du canal sécurisé (en fait des commandes sécurisées du lot), en particulier les secrets partagés, les clés de sessions, les algorithmes utilisés, etc.

En pratique, le dispositif tiers est chargé de transférer les commandes et éventuelles réponses sécurisées, car il ne connait pas ces données assurant la protection du canal sécurisé et est donc incapable de traiter les commandes et réponses ainsi transférées. En outre, il peut vérifier un statut général de traitement des commandes afin de déterminer si celles-ci peuvent être traitées avec succès, et peut renvoyer au dispositif maître, à la fin du traitement, un message de statut général indiquant par exemple le nombre de commandes transmises. Le dispositif maître peut ainsi prendre des décisions à partir du message de statut général reçu.

Dans le cadre des lots de commandes, le dispositif tiers peut jouer un rôle de temporisateur des commandes, par lequel il décide d'envoyer les commandes au dispositif esclave à un moment opportun, par exemple à des heures où les communications avec le dispositif esclave sont en faible nombre. Ainsi, le dispositif maître peut ne recevoir le message de statut général que plusieurs jours après avoir envoyé le script de commandes au dispositif tiers.

En outre ou en variante, le transfert des commandes peut être fait de façon régulière, par exemple de façon similaire aux techniques CRON ou CRONTABLE d'un système Unix.

Le mode prédictif d'un protocole de canal sécurisé est utilisé lors des étapes de production de puces (dispositif esclave) afin d'accélérer le processus de production. En effet, les commandes pré-générées peuvent ainsi être envoyées en lot minimisant le temps de traitement des commandes.

Une autre utilisation du mode prédictif concerne les composants (cartes, SE, eUICC) déployés, par exemple des cartes SIM d'un opérateur téléphonique ou des éléments sécurisés équipant des dispositifs de relevé à distance (machine-à-machine). Dans ce cas de déploiement, il est difficile d'établir un lien de communication continu (à cause d'un pare-feu, d'une zone informatique démilitarisée DMZ, etc.). Il peut alors s'avérer intéressant de transmettre le lot de commandes à un dispositif tiers à proximité du composant esclave. On connaît notamment les méthodes OTA (« *Over-The-Air* ») dans l'industrie mobile où un opérateur (le maître) pré-génère une série de commandes pour les cartes SIM (esclaves) des abonnés afin de les programmer/reconfigurer. Cette série de commandes peut être délivrée à n'importe quel moment à un dispositif tiers, généralement le terminal de l'abonné, responsable de transmettre les commandes à la carte SIM cible.

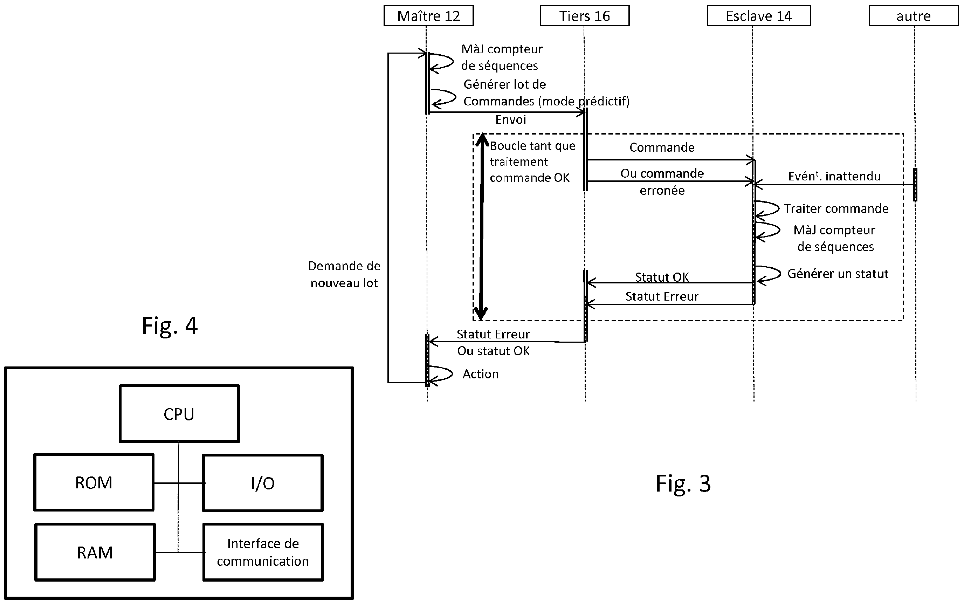

Le diagramme de la **Figure 3** illustre une utilisation classique d'un lot de commandes dans le système de la **Figure 2****.**

Dans cet exemple, le dispositif maître génère un lot de commandes à envoyer au dispositif esclave, par exemple celui de la **Figure 1** dans laquelle le lot de commandes inclut une commande, dite première commande (par exemple la commande d'initialisation INITIALIZE UPDATE selon SCP03), indiquant l'établissement, avec le dispositif esclave, d'un canal de communication sécurisé par au moins une clé de session (par exemple la clé S-MAC selon SCP03), cette clé de session étant dépendante d'une valeur courante d'une variable dynamique partagée entre le dispositif maître et le dispositif esclave, et inclut au moins une commande, dite deuxième commande, sécurisée (ou protégée) par un code d'authentification de message calculé à l'aide de la clé de session.

Cette génération met en oeuvre le mode prédictif du protocole de canal sécurisé, impliquant la mise à jour de la variable dynamique partagée (le compteur de séquence dans SCP03).

Ainsi, le dispositif tiers qui reçoit, du dispositif maître, le lot de commandes à envoyer au dispositif esclave, le joue de sorte à envoyer, au dispositif esclave, lesdites commandes du lot de façon séquentielle, commande par commande, tant qu'aucune erreur n'est détectée. Comme montré sur la figure, jouer le lot de commandes revient à boucler sur chaque commande, pour que cette dernière soit envoyée et qu'une réponse soit retournée (un message de statut d'exécution généralement).

Le canal sécurisé est fermé dès qu'une erreur survient. Un exemple d'erreur est l'expiration d'un timer (*timer out*) après envoi d'une commande restée sans réponse, ou un message d'erreur retourné par le dispositif esclave.

De son côté, le dispositif esclave reçoit les commandes de façon séquentielle, c'est-à-dire sans avoir conscience de l'existence d'un lot ou script de commandes joué par le dispositif tiers.

Ainsi, le dispositif esclave reçoit, du dispositif tiers, au moins une commande, dite première commande, indiquant l'établissement d'un canal de communication sécurisé par au moins une clé de session ; calcule une valeur de mise à jour de la ou les variables dynamiques (notamment le compteur de séquence) à partir d'une valeur courante de la ou les variables dynamiques stockées en mémoire non volatile ; génère la clé de session à partir de la valeur de mise à jour calculée. Puis compte tenu de l'envoi séquentiel (boucle) des commandes, le dispositif esclave reçoit également, du dispositif tiers, au moins une commande, dite deuxième commande, sécurisée par un code d'authentification de message (type C-MAC selon SCPP03) ; et vérifie le code d'authentification de message à l'aide de la clé de session avant d'exécuter ladite deuxième commande.

Généralement, le dispositif esclave renvoie un message de statut d'exécution (parfois des données) en réponse à chaque commande traitée.

Différentes situations peuvent conduire à ce que le dispositif tiers émette un statut d'échec de l'exécution du lot de commandes, et donc à la fermeture du canal sécurisé : absence de réponse du dispositif esclave aux commandes, message d'erreur reçu du dispositif esclave, mise hors tension du dispositif esclave par exemple suite à un manque de batterie, etc.

Lorsque le dispositif maître reçoit un tel message de statut d'échec, il peut souhaiter exécuter à nouveau les mêmes commandes, alors que le canal sécurisé a été fermé. Or les variables dynamiques à partir desquelles sont définis les mécanismes de sécurité du canal sécurisé ont évolué : les clés de session d'un nouveau canal sécurisé seront différentes de celles du canal sécurisé qui vient d'être fermé. Ainsi, il est classique que le dispositif maître ait à générer, en mode prédictif, un nouveau lot des mêmes commandes, mais en calculant de nouveaux codes d'authentification et en rechiffrant les données des commandes à l'aide de nouvelles clés de session prédites.

Or cette situation n'est pas satisfaisante car, pour que le lot de commandes soit exécuté avec succès, de nouvelles connexions, de nouveaux traitements cryptographiques (et donc coûteux) sont nécessaires pour que le dispositif maître puisse générer le nouveau lot de commandes. Cela diminue la capacité du dispositif maître à traiter d'autres demandes ou opérations standards.

En outre, compte tenu du fait que le traitement du lot de commandes par le dispositif tiers et le dispositif esclave peut être décorrelé, dans le temps, de l'envoi de ce même lot par le dispositif maître, ce dernier est informé tardivement de l'échec, conduisant ainsi à une perte importante de temps (parfois en jours) pour le dispositif maître. Cette perte de temps peut par exemple s'avérer préjudiciable si des mises à jour doivent être faites, par lot de commandes, dans une flotte de composants déployés. En effet, cette situation diminue les capacités du dispositif maître à programmer ou contrôler rapidement la flotte de composants déployés géographiquement.

Ce préjudice est d'autant plus important que les raisons de l'échec de l'exécution du lot de commandes peuvent être minimes et parfois très ponctuelles : tentative d'attaque par une personne malveillante, perturbation (par exemple interférences) sur le lien de communication entre les dispositifs tiers et esclave, etc.

L'invention vise à résoudre tout ou partie des inconvénients évoqués précédemment.

On connaît aussi le document US 2004/148502 décrivant le transfert de code source encrypté par des clés de session, entre une carte à puce et un serveur de compilation, et le transfert du code compilé encrypté par d'autres clés de session, entre le serveur et la carte.

Le document US 2012/159502 décrit, quant à lui, l'allocation de ressources CPU en fonction de deux compteurs, l'un étant mis à jour lorsque le second atteint une valeur seuil.

### RESUME DE L'INVENTION

L'objet de l'invention est défini par les revendications. Dans ce contexte, l'invention propose un procédé de communication comprenant, au niveau d'un dispositif esclave, les étapes évoquées ci-dessus, et en outre les étapes suivantes :
incrémenter, d'un incrément positif ou négatif (auquel cas on parle aussi de décrémenter), un compteur d'essais à réception de la première commande indiquant l'établissement d'un canal de communication sécurisé ; et
écraser la valeur courante de la variable dynamique en mémoire non volatile avec la valeur de mise à jour calculée lorsque le compteur d'essais atteint une valeur seuil. En d'autres termes, enregistrer la valeur de mise à jour calculée (de la variable dynamique), en mémoire non volatile comme nouvelle valeur courante de la variable dynamique lorsque le compteur d'essais atteint une valeur seuil.

Grâce à l'utilisation d'un compteur d'essais qui retarde la mise à jour concrète de la variable dynamique en mémoire non volatile (et donc avant que tout nouveau canal sécurisé ne nécessite de nouvelles données assurant la protection du canal sécurisé, par exemple de nouvelles clés de session, et donc avant que le lot de commandes ne soit obsolète), le dispositif esclave permet au dispositif tiers de pouvoir faire plusieurs essais du jeu de commandes à faire exécuter par le dispositif esclave. En effet, les clés de session des canaux sécurisés établis lors de ces rejeux sont les mêmes. Cette pluralité d'essais permet notamment de surmonter d'éventuelles attaques et/ou perturbations de communication afin d'exécuter l'intégralité du lot de commandes.

Ainsi, le rejeu d'un lot de commandes par le dispositif tiers est possible, ce qui réduit le recours au dispositif maître pour cette exécution intégrale. Le nombre de connexions, la quantité de
traitements cryptographiques nécessaires au dispositif maître et le temps nécessaire à cette exécution intégrale sont donc réduits. En outre, le dispositif maître est plus disponible à traiter d'autres commandes.

La validation de la mise à jour de la variable dynamique partagée en basculant la valeur de mise à jour comme nouvelle valeur courante en mémoire non volatile est également connue sous le terme de « *commitment* » dans la terminologie anglo-saxonne.

De façon symétrique, l'invention prévoit également un procédé de communication comprenant, au niveau d'un dispositif tiers, les étapes évoquées ci-dessus, et en outre l'étape suivante :
rejouer le lot de commandes tant que le dispositif tiers ne reçoit pas, du dispositif esclave, une indication d'une mise à jour de la valeur courante de la variable dynamique par le dispositif esclave. En d'autres termes, tant que le dispositif tiers ne reçoit pas, du dispositif esclave, un événement de sortie d'une boucle de rejeu du lot de commandes.

Comme on le verra par la suite, les indications peuvent être indirectes, c'est-à-dire implicite à des informations transmises.

L'invention permet un rejeu contrôlé d'un lot de commandes sécurisées, grâce à la prise en compte d'une indication du dispositif esclave sur la mise à jour effective ou non de la variable dynamique partagée à partir de laquelle sont établies les protections sécuritaires du canal sécurisé.

Ce comportement du dispositif tiers permet ainsi à un dispositif esclave d'utiliser un compteur d'essais comme évoqué plus haut, afin de réduire le recours au dispositif maître pour exécuter avec succès l'intégralité du lot de commandes.

Corrélativement, l'invention concerne également un dispositif de traitement, par exemple une carte à puce, comprenant une mémoire non volatile mémorisant une valeur courante d'une variable dynamique, et un processeur configuré pour :
recevoir, d'un dispositif tiers, au moins une commande, dite première commande, indiquant l'établissement d'un canal de communication sécurisé par au moins une clé de session ;
calculer une valeur de mise à jour de la variable dynamique à partir de la valeur courante stockée en mémoire non volatile ;
générer la clé de session à partir de la valeur de mise à jour calculée ;
recevoir, du dispositif tiers, au moins une commande, dite deuxième commande, sécurisée par un code d'authentification de message ; et
vérifier le code d'authentification de message à l'aide de la clé de session avant d'exécuter ladite deuxième commande ;
caractérisé en ce que le dispositif de traitement comprend en outre un compteur d'essais, et le processeur est configuré en outre pour :
   incrémenter le compteur d'essais à réception de la première commande indiquant l'établissement d'un canal de communication sécurisé ; et
   écraser la valeur courante de la variable dynamique en mémoire non volatile avec la valeur de mise à jour calculée lorsque le compteur d'essais atteint une valeur seuil.

Symétriquement, l'invention concerne également un dispositif de traitement comprenant un processeur configuré pour :
recevoir, d'un dispositif maître, un lot de commandes à envoyer à un dispositif esclave, le lot de commandes incluant une commande, dite première commande, indiquant l'établissement, avec le dispositif esclave, d'un canal de communication sécurisé par au moins une clé de session dépendante d'une valeur courante d'une variable dynamique partagée entre le dispositif maître et le dispositif esclave, et au moins une commande, dite deuxième commande, sécurisée par un code d'authentification de message calculé à l'aide de la clé de session ;
jouer le lot de commandes de sorte à envoyer, au dispositif esclave, lesdites commandes du lot de façon séquentielle, commande par commande, tant qu'aucune erreur n'est détectée ;
caractérisé en ce que le processus est configuré en outre pour :
   rejouer le lot de commandes tant que le dispositif de traitement ne reçoit pas, du dispositif esclave, une indication d'une mise à jour de la valeur courante de la variable dynamique par le dispositif esclave.

Egalement, l'invention propose un système comprenant un dispositif esclave tel que défini ci-dessus, un dispositif tiers tel que défini ci-dessus, et un dispositif maître configuré pour générer et envoyer le lot de commandes au dispositif tiers.

L'invention a également pour objet un produit programme d'ordinateur comprenant des instructions adaptées à la mise en oeuvre de chacune des étapes de l'un des procédés décrits précédemment lorsque ledit programme est exécuté sur un ordinateur.

Les dispositifs et produit programme d'ordinateur selon l'invention présentent des avantages similaires à ceux exposés précédemment en lien avec les procédés.

D'autres caractéristiques des procédés et dispositifs selon des modes de réalisation sont décrites dans les revendications dépendantes, essentiellement à l'aide d'une terminologie de procédé, transposables aux dispositifs.

Dans un mode de réalisation, l'étape de calcul d'une valeur de mise à jour comprend l'enregistrement de la valeur de mise à jour calculée dans une mémoire volatile du dispositif esclave.

Cette disposition garantit que la valeur courante de la variable dynamique n'est pas modifiée par la ou les valeurs calculées pour sa mise à jour. Ainsi, on conserve la possibilité d'établir un ou plusieurs canaux sécurisés à l'aide de la même valeur courante de la variable dynamique, demeurée inchangée en mémoire non volatile. Il en résulte que le rejeu, par le dispositif tiers, d'un lot de commandes requérant l'établissement d'un tel canal sécurisé est rendu possible et est garanti.

Dans un autre mode de réalisation, la valeur courante de la variable dynamique en mémoire non volatile est écrasée en mémoire non volatile avec la valeur de mise à jour calculée lorsque la dernière commande sécurisée de l'ensemble des deuxièmes commandes sécurisées (par exemple via un indicateur dans la commande concernée) comprend un code d'authentification de message valablement vérifié et est exécutée avec succès.

Cette situation correspond à l'exécution intégrale des commandes sécurisées du lot. Le canal sécurisé n'est désormais plus nécessaire et peut être fermé, auquel cas il convient de mettre à jour concrètement la ou les variables dynamiques afin que les prochains canaux sécurisés soient établis avec de nouvelles données de sécurité (clés de session par exemple). Cette situation est un exemple d'événement de sortie de la boucle de rejeu, car un tel rejeu s'avère inutile compte tenu de l'exécution réalisée avec succès.

Dans un mode de réalisation particulier, le procédé (du côté du dispositif esclave) comprend en outre, l'étape suivante : transmettre, au dispositif tiers et en réponse à ladite dernière commande sécurisée, un message comprenant une indication que l'exécution de ladite ou desdites deuxièmes commandes du lot s'est réalisée avec succès. Cette indication permet notamment au dispositif tiers d'être indirectement informé de la mise à jour effective de la variable dynamique (le compteur de séquence dans SCP03) en mémoire non volatile du dispositif esclave.

Dans encore un autre mode de réalisation, la valeur courante de la variable dynamique en mémoire non volatile est écrasée en mémoire non volatile avec la valeur de mise à jour calculée lorsque une dite deuxième commande dont le code d'authentification de message a été vérifié avec succès conduit à une erreur ou exception d'exécution de cette deuxième commande, comme par exemple lorsqu'un cryptogramme hôte (procédure d'authentification décrite par la suite) est déclaré invalide lors d'une commande EXTERNAL AUTHENTICATE (dans SCP03) ou lorsque la commande décryptée s'avère être erronée. Ces situations sont des exemples d'événement de sortie de la boucle de rejeu, car, dans ces situations, le rejeu de la même commande conduira à la même erreur : le rejeu du lot de commandes sécurisées s'avère donc inutile.

Cette configuration force la mise à jour effective de la variable dynamique en mémoire non volatile (commitment ou basculement), et donc rend désormais impossible le rejeu du lot du commandes, car l'erreur ou exception d'exécution traduit une erreur intrinsèque aux commandes sécurisées du lot, qui ne pourra être corrigée par un simple rejeu, mais par le dispositif maître en générant un nouveau lot des mêmes commandes. La disposition ici proposée permet donc d'éviter une perte de temps liée au rejeu d'un lot de commandes intrinsèquement erroné.

Dans un mode de réalisation particulier, le procédé (du côté du dispositif esclave) comprend en outre, l'étape suivante : transmettre, au dispositif tiers et en réponse à ladite deuxième commande conduisant à une erreur ou exception d'exécution, un message comprenant une indication de l'erreur ou exception d'exécution en dépit d'un code d'authentification de message vérifié avec succès. Cette indication permet également au dispositif tiers d'être indirectement informé de la mise à jour effective de la variable dynamique (le compteur de séquence dans SCP03) en mémoire non volatile du dispositif esclave.

On comprend de ces diverses dispositions que le commitment ou basculement de la variable dynamique (le compteur de séquences dans SCP02 ou SCP03 par exemple) n'a lieu que lorsque l'un des événements de sortie de la boucle de rejeu (atteinte de la valeur seuil de compteur, fin du lot de commandes, détection d'une commande erronée dans le lot malgré son authenticité et son intégrité) se produit. Hors de tels événements, le lot de commandes peut être rejoué si une erreur inattendue s'est produite, et ce tant que le nombre d'essais autorisé n'est pas atteint.

Dans un mode de réalisation, le compteur d'essais est réinitialisé à une valeur par défaut lorsque la valeur courante de la variable dynamique en mémoire non volatile est écrasée avec la valeur de mise à jour calculée. Par exemple, cette valeur par défaut, mémorisée en mémoire EEPROM, peut être modifiable dans le temps.

Cette disposition permet de reconfigurer le système pour une nouvelle série de rejeux d'un nouveau lot de commandes, les commandes de ce nouveau lot devant avoir été sécurisées à l'aide de la variable dynamique telle qu'effectivement mise à jour (c'est-à-dire avec la nouvelle valeur courante).

Dans un mode de réalisation particulier, l'étape consistant à écraser la valeur courante en mémoire non volatile avec la valeur de mise à jour calculée et l'étape consistant à réinitialiser le compteur d'essais sont réalisées avant l'étape de génération de la clé de session à partir de la valeur de mise à jour calculée.

Cette disposition garantit une sécurité forte du procédé selon l'invention, en réduisant les risques qu'une personne malveillante puisse rejouer indéfiniment un ensemble d'opérations par le dispositif esclave, car le commitment ou basculement de la variable dynamique est réalisé au plus tôt dans la procédure d'initialisation du canal sécurisé.

Notamment l'étape d'enregistrement peut précéder celle d'incrémentation.

Dans un mode de réalisation particulier, l'étape consistant à écraser la valeur courante en mémoire non volatile avec la valeur de mise à jour calculée et l'étape consistant à réinitialiser le compteur d'essais sont réalisées en une étape atomique.

Cette disposition permet de réduire significativement les risques d'une désynchronisation entre la variable dynamique et le compteur d'essais, et par voie de conséquence les possibilités pour une personne malveillante de rejouer indéfiniment le lot de commandes.

Dans un mode de réalisation, ladite première commande est une dite deuxième commande sécurisée par un code d'authentification de message. Une indication de la mise en oeuvre d'un mécanisme de sécurisation du canal (cryptage et MAC par clé) peut être prévue dans un champ non sécurisé et donc lisible (par exemple le code CLA dans SCP03) de l'entête de la commande, permettant de déclencher la génération des clés de session pour décrypter la commande et vérifier le code MAC.

Dans un mode de réalisation relatif au dispositif tiers, recevoir l'indication d'une mise à jour (effective) de la variable dynamique (partagée) par le dispositif esclave comprend recevoir, du dispositif esclave, une valeur courante de la variable dynamique et comparer la valeur courante reçue avec une valeur locale de la variable dynamique. Le dispositif tiers peut ainsi directement vérifier si le terminal esclave a mis à jour, de façon publique, sa variable dynamique par comparaison avec la dernière valeur (locale) dont il a connaissance.

Notamment, la valeur courante de la variable dynamique peut être reçue, par le dispositif tiers, dans une réponse du dispositif esclave à la première commande. Cette disposition s'appuie sur les protocoles déjà existants sans les modifier, tout en nécessitant peu de traitements additionnels pour le dispositif tiers. En effet, il est classique que le compteur de séquence (c'est-à-dire une variable dynamique partagée dans le cas de SCP02 et SCP03) soit retourné en réponse à la commande d'initialisation (INITIALIZE UPDATE dans ces mêmes protocoles), permettant au dispositif tiers, par simple comparaison avec la dernière valeur du compteur dont il a connaissance, de déterminer efficacement si une mise à jour effective (commitment) du compteur de séquence a eu lieu ou non dans l'intervalle.

Dans un autre mode de réalisation, l'indication d'une mise à jour de la valeur courante (permettant ainsi de décider du rejeu d'un lot courant de commandes) comprend une indication que l'exécution de ladite ou desdites deuxièmes commandes du lot par le dispositif esclave s'est réalisée avec succès.

Dans un autre mode de réalisation, l'indication d'une mise à jour de la valeur courante comprend une indication que l'exécution, par le dispositif esclave, d'une deuxième commande du lot dont le code d'authentification de message a été vérifié avec succès a conduit à une erreur de cette deuxième commande. Comme exposé plus haut, cette configuration inclut le cas où la vérification du cryptogramme hôte de la commande EXTERNAL AUTHENTICATE (SCP03) a échoué malgré un code MAC valide.

Préférentiellement, les trois exemples d'indication définis ci-dessus pour le dispositif tiers (valeur courante, indication du succès ou d'une erreur malgré un code MAC valide) sont les seuls événements de sortie de la boucle de rejeu à partir desquels le dispositif tiers sait qu'il ne peut rejouer le lot de commandes. En effet, comme expliqué plus haut, la variable dynamique partagée a, dans ces cas, été mise à jour, ce qui fait que les codes d'authentification MAC voire les chiffrements des commandes dans le lot courant sont désormais désynchronisés des nouvelles clés de session.

Dans un autre mode de réalisation, recevoir l'indication d'une mise à jour (effective) de la variable dynamique par le dispositif esclave comprend recevoir, du dispositif esclave, un message d'erreur (par exemple 0x6982 dans SCP03 de GlobalPlatform) en réponse à une dite deuxième commande immédiatement subséquente à la première commande, le message d'erreur indiquant un code d'authentification de message erroné de ladite deuxième commande immédiatement subséquente à la première commande.

Dans cette configuration, le dispositif tiers considère que si, dès la première commande protégée par un code MAC (basé sur la variable dynamique, via les clés de session), le code MAC est erroné (message d'erreur 0x6982 dans la norme GlobalPlatform), alors il est probable que les clés de session (et pas voie de conséquence la variable dynamique) ne sont pas celles prévues pour les codes MAC générés au préalable dans le lot de commandes. Il est en effet probable que la variable dynamique ait été incrémentée du côté du dispositif esclave résultant en une désynchronisation avec le lot de commandes prédit antérieurement. On comprendra que cette disposition n'est pas optimale car une erreur de code MAC peut aussi résulter d'une perturbation du canal de communication.

Dans un mode de réalisation, les codes d'authentification de message de plusieurs deuxièmes commandes sont chaînés, notamment en ce sens que le calcul du code d'authentification MAC d'une deuxième commande suivante dépend du code MAC d'une deuxième commande précédente. Cette disposition sécurise l'exécution du lot de commandes contre des attaques visant à insérer des commandes non prévues ou désordonner les commandes définies dans le batch.

### BREVE DESCRIPTION DES FIGURES

D'autres particularités et avantages de l'invention apparaîtront encore dans la description ci-après, illustrée par les dessins ci-joints, dans lesquels :
- les **Figures 1** et **1A** illustrent des exemples de lots ou batchs de commandes pré-générées ;
- la **Figure 2** représente schématiquement un système dans lequel des modes de réalisation de l'invention sont mis en oeuvre ;
- la **Figure 3** illustre une utilisation classique d'un lot de commandes dans le système de la **Figure 2** ;
- la **Figure 4** illustre un exemple d'architecture matérielle de chaque dispositif constitutif du système décrit en référence à la **Figure 2** ;
- la **Figure 5** illustre schématiquement les échanges classiques conformément au protocole SCP03 défini dans GlobalPlatform ;
- la **Figure 5A** illustre schématiquement des échanges dans un mode prédictif du protocole SCP03 ;
- la **Figure 5B** illustre schématiquement des échanges dans un mode prédictif d'un lot de commandes sans procédure d'authentification ;
- la **Figure 6** illustre, sur le même schéma que la **Figure 3**, la possibilité de rejeu d'un lot de commandes selon des modes de réalisation de l'invention ;
- la **Figure 7** illustre, sous forme d'ordinogramme, des étapes générales d'un mode de réalisation de l'invention du côté du dispositif esclave ;
- la **Figure 8** illustre, sous forme d'ordinogramme, des étapes générales d'un mode de réalisation de l'invention du côté du dispositif tiers ;
- la **Figure 9** illustre, en reprenant le schéma de la **Figure 5A**, des échanges d'un mode de réalisation de l'invention s'appuyant sur le mode prédictif du protocole SCP03 ;
- la **Figure 9A** illustre, en reprenant le schéma de la **Figure 5B**, des échanges d'un mode de réalisation de l'invention d'un lot de commandes prédites sans procédure d'authentification ; et
- la **Figure 10** illustre l'effet de temporisation de la mise à jour effective en mémoire non volatile du compteur de séquences lors d'une mise en oeuvre de l'invention.

### DESCRIPTION DETAILLEE DE L'INVENTION

La **Figure 2** illustre, de manière schématique, un exemple de système dans lequel des modes de réalisation de la présente invention peuvent être mis en oeuvre. Le système 10 comprend un dispositif maître 12, par exemple un serveur d'un opérateur téléphonique, et un dispositif esclave 14, par exemple une carte SIM, que l'opérateur téléphonique souhaite mettre à jour. Le dispositif esclave 14 est par exemple embarqué dans un terminal mobile, jouant le rôle de dispositif tiers 16 dans des échanges entre les dispositifs maître 12 et esclave 14. D'autres dispositifs intermédiaires (non représentés) entre les dispositifs maître 12 et esclave 14 peuvent exister dans le cadre de l'invention.

Dans cet exemple, le serveur de l'opérateur téléphonique est dit « maître » car il est à l'initiative des échanges avec la carte SIM, qui est donc « esclave ». Pour réaliser ces échanges, le dispositif maître initie un canal sécurisé, par exemple selon le protocole SCP03, puis envoie une série de commandes à la carte SIM. D'autres protocoles et des modes dégradés de SCP02 et SCP03 envisagent de s'affranchir d'une procédure d'initialisation du canal sécurisé, et permettent l'envoi direct de commandes sécurisées. Dans ce cas, la première commande sécurisée indique qu'un canal sécurisé est implicitement établi, généralement à partir de secrets partagés entre le maître et l'esclave.

Le lien entre le dispositif maître 12 et le dispositif tiers 16 peut être filaire (connexion Ethernet) ou sans fil (réseau mobile). Dans l'exemple où le dispositif tiers 16 est un terminal embarquant une carte SIM 14, le lien de communication entre ces deux entités est de type avec contact. Bien entendu, des variantes sans contact (sans fil) peuvent être envisagées.

La **Figure 4** illustre un exemple d'architecture matérielle de chaque dispositif constitutif du système décrit en référence à la **Figure 2****.**

Dans cet exemple, le dispositif, c'est-à-dire la carte SIM 14 ou le terminal 16 ou le serveur 12, comprend un bus de communication auquel sont reliés :
- une unité de traitement -ou microprocesseur- notée CPU (sigle de *Central Processing Unit* en terminologie anglo-saxonne) ;
- une ou plusieurs mémoires non volatile par exemple ROM (acronyme de *Read Only Memory* en terminologie anglo-saxonne) pouvant constituer un support au sens de l'invention, c'est-à-dire pouvant comprendre un programme informatique comprenant des instructions pour la mise en oeuvre d'un procédé selon un mode de réalisation de l'invention. Cette mémoire non volatile peut également être une mémoire EEPROM (acronyme de *ElectricallyErasable Read Only Memory* en terminologie anglo-saxonne) ou encore une mémoire Flash. Notamment, cette mémoire non volatile du dispositif esclave 14 mémorise la valeur courante de la ou les variables dynamiques partagées, par exemple du compteur de séquence dans le cas SCP02 ou SCP03 évoqué par la suite.

- une mémoire vive ou mémoire cache ou mémoire volatile par exemple RAM (acronyme de *Random Access Memory* en terminologie anglo-saxonne) comprenant des registres adaptés à l'enregistrement des variables et paramètres créés et modifiés au cours de l'exécution du programme précité ; lors de la mise en oeuvre de l'invention, les codes d'instructions du programme stocké en mémoire morte ROM sont chargés en mémoire RAM en vue d'être exécutés par l'unité de traitement CPU ;
- une interface de communication adaptée à transmettre et à recevoir des données, par exemple via un réseau de télécommunications ou une interface de lecture/écriture d'un élément sécurisé ;
- une interface d'entrées/sorties I/O (pour *Input*/*Output* en terminologie anglo-saxonne), par exemple un écran, un clavier, une souris ou un autre dispositif de pointage tel qu'un écran tactile ou une télécommande ; cette interface I/O permet à l'utilisateur d'interagir avec le système au cours de la mise en oeuvre du procédé via une interface graphique.

Le bus de communication permet la communication et l'interopérabilité entre les différents éléments inclus dans l'équipement ou reliés à lui. La représentation du bus n'est pas limitative et, notamment, l'unité de traitement est susceptible de communiquer des instructions à tout élément de l'équipement directement ou par l'intermédiaire d'un autre élément de cet équipement.

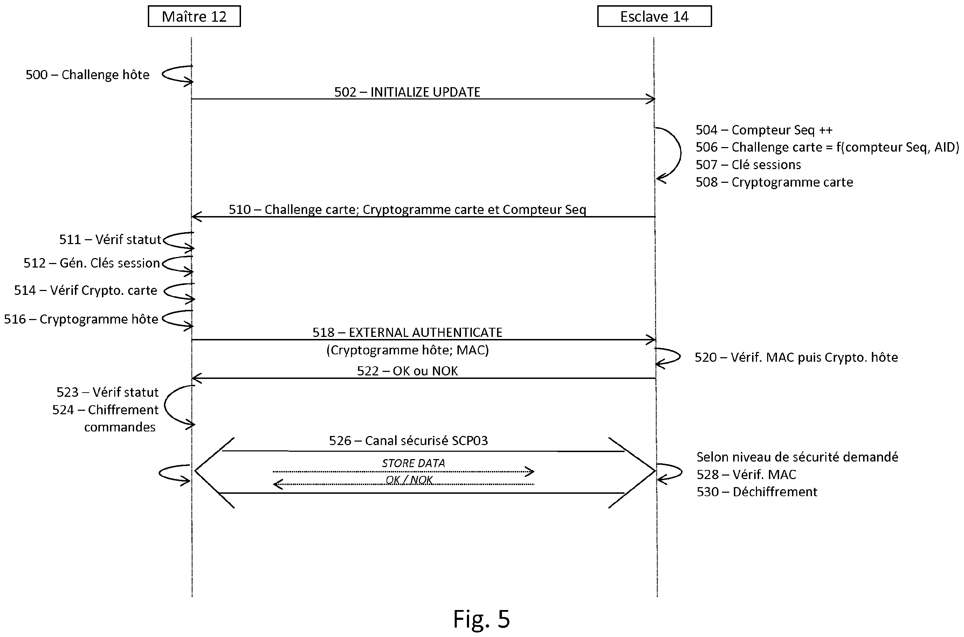

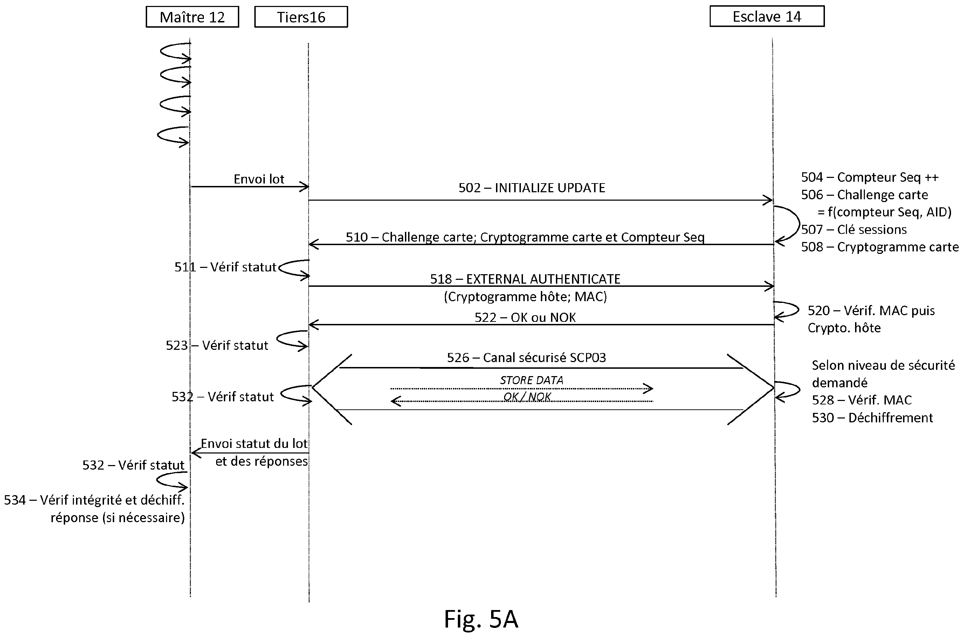

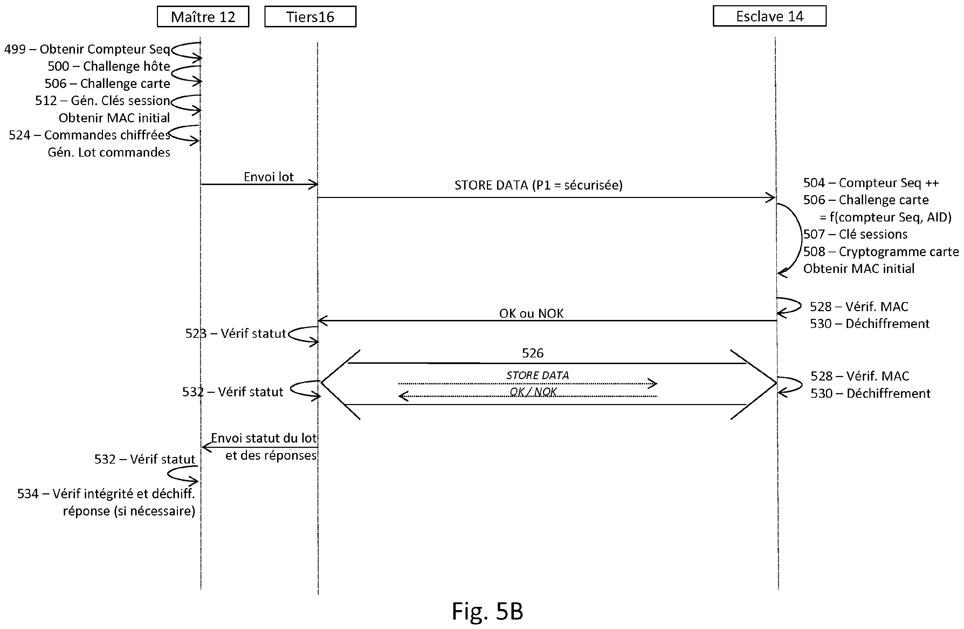

La **Figure 5** illustre schématiquement les échanges classiques conformément au protocole SCP03 défini dans GlobalPlatform. Il est à noter que dans le mode prédictif susmentionné, l'ensemble des commandes envoyées par le dispositif maître sur cette figure peut être groupé en un lot de commandes joué par un dispositif tiers, par exemple un terminal embarquant un dispositif esclave de type carte SIM.

Comme montré schématiquement sur la **Figure 1**, ces échanges peuvent comprendre une première partie dédiée à l'établissement d'un canal sécurisé, impliquant une procédure d'authentification de type « *Challenge-Response* » bien connue. Bien que non illustré, ces commandes à destination d'une application cible du dispositif esclave ont lieu après une commande initiale de sélection de ladite application cible, typiquement une commande SELECT largement connue. Dans une variante, aucune commande SELECT n'est prévue, une application du dispositif esclave 14 pouvant être sélectionnée par défaut (c'est-à-dire tant qu'aucune commande SELECT pour une autre application n'est reçue) à la mise sous tension du dispositif esclave 14.

Ainsi, le dispositif maître 12 génère, à l'étape 500, un challenge hôte (de façon aléatoire ou pseudo-aléatoire) qu'il transmet au dispositif esclave 14 lors de l'étape 502, à l'aide d'une commande INITIALIZE UPDATE.

A réception de cette commande, le dispositif esclave 14 met à jour, à l'étape 504, son compteur de séquences (sur trois octets) par incrémentation (la valeur courante est incrémentée en mémoire non volatile), puis calcule, à l'étape 506, un challenge de carte fonction du compteur de séquences et d'un identifiant (AID) d'une application sélectionnée dans la carte. La génération du challenge de carte est généralement pseudo-aléatoire et prédictive (pour le dispositif maître 12 dans le cas d'un canal prédictif).

A l'étape 507, le dispositif esclave 14 génère les clés de session (notamment décrites dans la section 6 de la norme GlobalPlatform) pour le canal sécurisé, à l'aide notamment de la valeur courante du compteur de séquences, des challenges hôte et carte, ainsi que d'un ou plusieurs secrets statiques partagés entre les dispositifs maître et esclave.

A l'étape 508, le dispositif esclave 14 calcule un cryptogramme d'authentification pour la carte, fonction des challenges hôte et carte, ainsi que d'une constante (partagée). Par exemple la fonction de génération du cryptogramme peut être l'algorithme S-MAC basé sur une des clés de session générées.

Le dispositif esclave 14 renvoie au dispositif maître 12 le challenge de carte, le cryptogramme de la carte, ainsi que la valeur courante du compteur de séquences. C'est l'étape 510.

A réception de ces données, le dispositif maître 12 vérifie (511) le statut de la réponse avant de continuer, indiqué par exemple dans l'argument optionnel. Si le statut est positif (champ SW=9000), le dispositif maître 12 génère, à l'étape 512, les clés de session de façon similaire au dispositif esclave 14.

Puis, le dispositif maître 12 calcule et vérifie le cryptogramme carte, en appliquant le même algorithme (partagé) que celui du dispositif esclave 14. C'est l'étape 514.

A l'étape 516, le dispositif maître 12 calcule un cryptogramme d'authentification pour l'hôte, fonction des clés de session (elles-mêmes fonction des challenges hôte et carte, le challenge carte étant en outre fonction du compteur de séquences en mode prédictif), ainsi que d'une constante (partagée). Par exemple la fonction de génération du cryptogramme peut être l'algorithme S-MAC basé sur une des clés de session générées.

Ce cryptogramme hôte est envoyé au dispositif esclave 14 par une commande EXTERNAL AUTHENTICATE, laquelle est protégée en intégrité et en authenticité par l'adjonction d'un code d'authentification MAC calculé sur le cryptogramme hôte, à l'aide d'une clé de session dédiée au MAC. L'envoi correspond à l'étape 518.

A l'étape 520, le dispositif esclave 14 vérifie le code MAC, puis le cryptogramme hôte reçu afin de confirmer la création du canal sécurisé (réponse d'acquittement 522). Le dispositif maître 12 vérifie le statut de la réponse reçue.

En parallèle ou après vérification positive du statut de la réponse, à l'étape 524, le dispositif maître 12 génère et optionnellement chiffre (à l'aide des clés de session) une ou plusieurs commandes. En outre, un code MAC de sécurité est calculé pour chacune d'entre elles puis leur est ajouté. Le chiffrement des commandes et leurs codes MAC sont généralement, mais non nécessairement, chaînés au sens où chacune d'entre elles dépend de la précédente (et donc initialement du MAC de la commande EXTERNAL AUTHENTICATE).

Bien entendu, dans le mode prédictif, ces commandes, incluant leur chiffrement et leur code MAC, sont prédites et donc générées préalablement à l'établissement du canal sécurisé.

L'étape 526 représente schématiquement l'envoi successif de ces commandes et la réception, par le dispositif maître 12, de leurs réponses. Par exemple, une commande peut être la commande STORE DATA définie dans GlobalPlatform pour le stockage de nouvelles données en mémoire non volatile du dispositif esclave 14.

Pour chacune de ces commandes sécurisées, le dispositif esclave 14 vérifie le code MAC (étape 528), puis la déchiffre (étape 530) avant de l'exécuter. En réponse à cette exécution, il retourne un acquittement positif (OK, le champ SW vaut 9000) ou un message d'erreur (NOK), qui est traité par le dispositif maître (étape 532), voire des données chiffrées et protégées par MAC auquel cas le dispositif maître 12 vérifie leur intégrité (par le code MAC) puis procède à leur déchiffrement (534).

La **Figure 5A** illustre une réalisation du mode prédictif pour SCP03 conduisant à l'envoi d'un lot de commandes à un dispositif tiers 16.

Il est à noter que dans le mode prédictif, le dispositif maître 12 ne tient pas compte des éléments de la réponse 510. En effet, il détient localement une image des variables et valeurs détenues par le dispositif esclave 14, permettant de calculer localement le challenge de carte, le cryptogramme de carte en connaissance de la nouvelle valeur du compteur de séquences.

Dans l'exemple représenté, ces différents traitements que le dispositif maître 12 réalise de façon prédictive sont effectués avant de transmettre le lot (batch) de commandes : récupération de la valeur publique du compteur de séquences partagé avec l'application cible, génération pseudo-aléatoire des challenges hôte et carte, génération des clés de session, génération des commandes INITIALIZE UPDATE et EXTERNAL AUTHENTICATE, avec son code MAC, génération d'autres commandes sécurisées pour former le lot de commandes.

Le dispositif tiers 16 joue alors un rôle intermédiaire simple : ce dernier reçoit, du dispositif maître 12, uniquement le lot de commandes à jouer pour son compte auprès du dispositif esclave 14. Il peut vérifier le statut de réponse reçue afin de déterminer si l'exécution du lot doit être avortée. En variante, il peut se contenter de retransmettre l'ensemble des réponses aux commandes qu'il transmet successivement.

A la fin de l'exécution du lot de commandes, le dispositif tiers 16 peut envoyer un message de statut général au dispositif maître 12, afin par exemple de lui indiquer le nombre de commandes envoyées et si l'exécution du lot entier a été effectuée avec succès ou non. En variante, aucun message de statut général n'est envoyé, la vérification de l'état (succès ou échec) pouvant être sollicitée lors d'une commande suivante.

Dans ces modes de réalisation de SCP03, les commandes STORE DATA sont sécurisées, c'est-à-dire munies d'un code MAC chaîné. Dans une variante dégradée, le protocole SCP03 peut être utilisé que pour le processus d'authentification (commandes INITIALIZE UPDATE et EXTERNAL AUTHENTICATE) de sorte que les commandes STORE DATA générés à l'étape 524 sont ni chiffrées ni sécurisées par un code MAC. Ainsi, seule la commande EXTERNAL AUTHENTICATE est sécurisée par MAC. Elle indique en outre, via le paramètre P1 (défini dans Global Platform), que les commandes ultérieures ne sont pas sécurisées.

Dans des modes de réalisation sans processus d'authentification, les commandes INITIALIZE UPDATE et EXTERNAL AUTHENTICATE ne sont pas prévues, et le lot de commandes commence directement par des commandes sécurisées, type STORE DATA (voir **Figure 1A** où la commande SELECT APPLICATION est optionnelle car elle peut être réalisée de façon décorrelée, avant la transmission des commandes sécurisées STORE DATA). Cela est rendu possible grâce à la prédiction des variables dynamiques permettant aux dispositifs maître et esclave de disposer des mêmes clés de session sans même échanger de message. L'information de sécurisation des commandes est par exemple renseignée dans le paramètre P1 de la première commande STORE DATA (identifiable grâce au paramètre « *block number*» égal à 0 pour cette commande) ainsi reçu, permettant de déclencher les étapes 504-508 sur le dispositif esclave 14. Voir en ce sens la **Figure 5B****.** Dans la configuration de cette Figure, le challenge hôte peut être (pseudo-aléatoire) prédictible, permettant au dispositif esclave 14 de l'obtenir par un processus interne. En variante, il peut être obtenu lors d'une opération précédente (non illustrée) avec le dispositif maître 12.

Le protocole SCP02 également défini dans GlobalPlatform se distingue du protocole SCP03 de la **Figure 5** en ce que le compteur de séquences n'est pas incrémenté à réception de la commande INITIALIZE UPDATE, mais à réception de la commande EXTERNAL AUTHENTICATE.

La présente invention s'inscrit dans le cadre d'un mode prédictif d'un protocole de canal sécurisé, par exemple du protocole SCP02 ou SCP03. Dans les techniques connues, un lot de commandes pré-générées ne peut être joué qu'une seule fois, conduisant à de nombreux surcoûts, principalement pour le dispositif maître 12.

Afin de permettre un rejeu de ce lot de commandes, l'invention prévoit d'utiliser un compteur de rejeux ou d'essais. Le nombre de rejeux est de préférence raisonnable, notamment pour empêcher une personne malintentionnée de tester à l'infini une séquence (lot) de commandes. Dans ce cas, ce nombre est limité par une valeur seuil ou « limite de rejeu », comme illustré par la suite.

Le compteur d'essais permet de temporiser l'incrémentation concrète du compteur de séquences, c'est-à-dire sa mise à jour effective en mémoire non volatile. Ainsi, pendant l'utilisation du compteur d'essais, la valeur courante du compteur de séquences servant de référence pour l'établissement d'un canal sécurisé reste inchangée en mémoire non volatile, ce qui permet de rejouer le même lot de commandes sécurisé avec les clés de sessions prédites de ce canal sécurisé. Ce n'est que lorsque cette valeur en mémoire non volatile est mise à jour (modifiée), que le lot de commandes devient obsolète, nécessitant de solliciter le dispositif maître pour l'obtention d'un lot mis à jour pour correspondre aux clés de sessions prédites à partir de la nouvelle valeur courante du compteur de séquences.

Comme défini plus haut, un dispositif esclave 14 selon l'invention incrémente un compteur d'essais à réception d'une commande, dite première commande (notamment une commande d'initialisation INITIALIZE UPDATE dans SCP02 ou SCP03), indiquant l'établissement d'un canal de communication sécurisé ; et écrase la valeur courante de la variable dynamique en mémoire non volatile avec la valeur de mise à jour calculée lorsque le compteur d'essais atteint une valeur seuil, c'est-à-dire qu'il enregistre une valeur de mise à jour calculée, en mémoire non volatile comme nouvelle valeur courante de la variable dynamique (par exemple le compteur de séquences utilisée pour sécuriser le canal de communication) lorsque le compteur d'essais atteint une valeur seuil.

Grâce à l'utilisation de ce compteur d'essais qui retarde la validation (commitment) de la valeur de mise à jour comme nouvelle valeur courante de la variable dynamique en mémoire non volatile, les mêmes commandes (sécurisées par la valeur courante de la variable dynamique) peuvent être rejouées. Ainsi, le dispositif tiers 16 peut rejouer le lot de commandes tant que le dispositif esclave n'a pas mis à jour la valeur courante de la variable dynamique en mémoire non volatile, c'est-à-dire tant qu'il ne reçoit pas, du dispositif esclave 14, une indication indiquant une mise à jour de la valeur courante de la variable dynamique (le compteur de séquences) par le dispositif esclave. Comme on le verra par la suite il convient par exemple pour le dispositif tiers 16 d'être capable d'analyser les statuts de réponse du dispositif esclave 14 afin d'y détecter certains statuts correspondant à des situations où le dispositif esclave a concrètement mis à jour la valeur courante du compteur de séquences car un rejeu du lot de commandes n'est pas opportun.

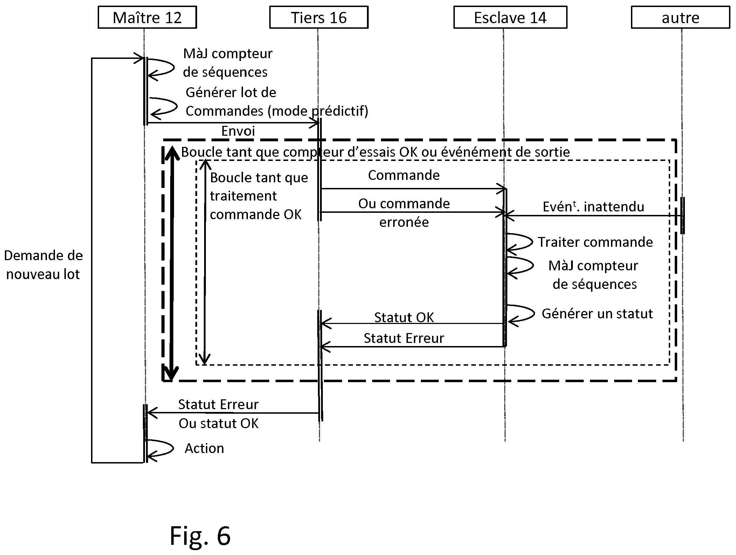

La **Figure 6** illustre, sur le même schéma que la **Figure 3**, la possibilité de rejeu d'un lot de commandes par le dispositif tiers 16, représentée sur cette figure par une boucle (flèche en gras) tant que la limite du nombre d'essais comptabilisé par le dispositif esclave 14 n'est pas atteinte (auquel cas une indication est transmise au dispositif tiers 16) ou qu'un événement de sortie (indiquant qu'un rejeu du lot de commandes n'est pas utile) se réalise.

Dans cette configuration, la survenance d'un événement inattendu (timer out, reset, perturbation du canal de communication, etc.) ne conduit pas directement à solliciter le dispositif maître 12 pour la génération d'un nouveau lot de commandes. Ici, le lot de commandes pour lequel l'événement inattendu s'est produit peut être rejoué s'il ne s'agit pas d'un événement dit « de sortie ». Si cet événement est ponctuel, le nouveau rejeu du lot de commandes devrait conduire à ce qu'il soit joué dans son entier. On voit ainsi que l'on évite de solliciter le dispositif maître, lorsque des événements incontrôlés surviennent.

Dans l'approche proposée ici, le dispositif tiers 16 dispose donc de la capacité de rejouer, jusqu'à une certaine limite, un lot de commandes lorsqu'il reçoit, de la part du dispositif esclave 14, une notification d'erreur sur les commandes jouées, c'est-à-dire un événement de sortie de la boucle de rejeu.

Lorsque ladite limite du nombre de rejeux est atteinte, le dispositif esclave 14 l'indique (explicitement ou implicitement) de sorte que le dispositif tiers 16 ne rejoue pas le lot courant de commandes, mais sollicite le dispositif maître 12 pour générer un nouveau lot de commandes mis à jour (si le lot courant n'a pas pu être exécuté normalement). Les commandes du nouveau lot peuvent être similaires à celles du lot courant ; la différence étant que le chiffrement et le calcul des codes MAC pour les commandes sécurisées sont désormais basés sur une nouvelle valeur du compteur de séquences, dans SCP02 ou SCP03.

Bien entendu, lorsque l'exécution du lot entier de commandes s'est déroulé avec succès, il est prévu que le rejeu ne soit pas possible, afin d'éviter toute analyse par une personne malintentionnée. Un statut indiquant l'exécution avec succès du lot de commandes constitue ainsi un événement de sortie de la boucle de rejeu. D'autres événements de sortie sont envisagés ci-dessous pour éviter un rejeu lorsque celui-ci s'avère inutile. C'est par exemple le cas lorsqu'une commande sécurisée, intègre et authentique (c'est-à-dire avec un code MAC valide) conduit à une erreur ou exception d'exécution.

Dans ces cas, le dispositif esclave 14 n'a qu'à mettre à jour le compteur de séquences (la variable dynamique) en mémoire non volatile, rendant obsolète le lot courant de commandes. Le dispositif tiers 16 est notifié de cette situation grâce aux statuts de réponse qu'il reçoit du dispositif esclave 14.

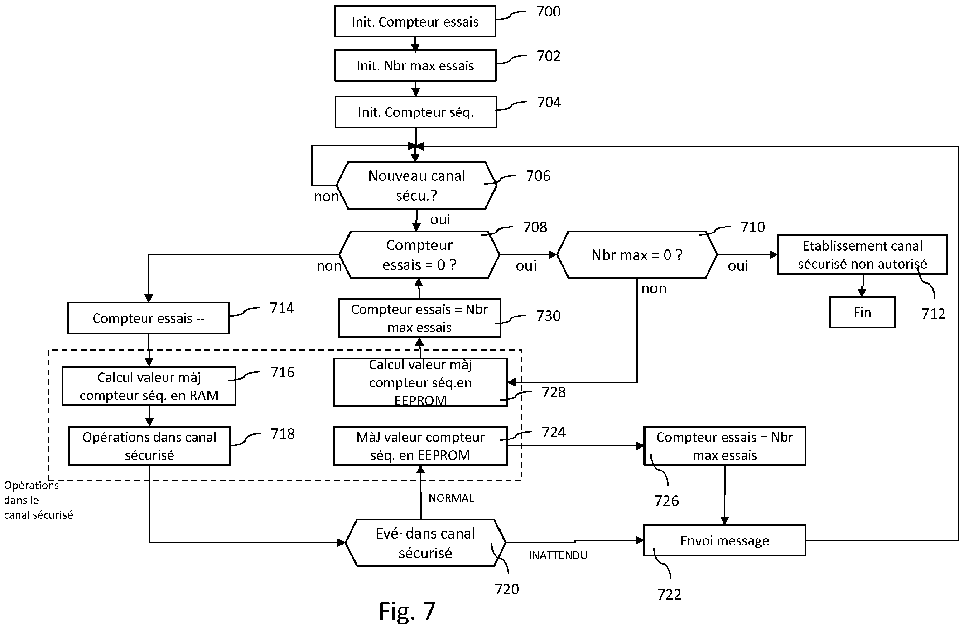

La **Figure 7** illustre, sous forme d'ordinogramme, des étapes générales d'un mode de réalisation de l'invention du côté du dispositif esclave 14.

Le procédé de la figure débute par une phase d'initialisation (étapes 700 à 704) qui peut se produire lors de la personnalisation du dispositif esclave, typiquement une carte à puce ou un élément sécurisé. Lors de cette phase, un compteur d'essais est créé en mémoire non volatile, et initialisé à une valeur par défaut, par exemple 10, à l'étape 700. Puis à l'étape 702, une valeur seuil limite du nombre d'essais (et donc de rejeux) est définie et stockée en mémoire non volatile, par exemple 10. Dans ce mode de réalisation où le compteur d'essais est initialisé au nombre d'essais maximum autorisés, ce compteur d'essais sera décrémenté pour atteindre, au final, la valeur 0, ce qui est facilement détectable car à ce moment là, le passage du compteur de 0 à -1 nécessite de modifier tous les bits (par exemple pour un compteur sur 32 bits : 00000000 -> FFFFFFFF si sur quatre octets). Bien entendu, d'autres modes de réalisation peuvent initialiser le compteur à 0 et l'incrémenter jusqu'à la valeur seuil limite égale à 10.

A l'étape 704, la ou les variables dynamiques, typiquement le compteur de séquences, sont initialisées. Par exemple le compteur de séquences est initialisé à 0.

Ce peut être lors de cette étape 704 que la variable dynamique et d'éventuels autres paramètres (par exemple un secret) sont partagés entre le dispositif esclave 14 et le dispositif maître 12 pour permettre la mise en oeuvre du mode prédictif des protocoles de canal sécurisé.

Suite à sa personnalisation, le dispositif esclave 14 est mis en service où il est en attente de l'établissement d'un nouveau canal sécurisé. Il s'agit par exemple de la réception d'une commande INITIALIZE UPDATE dans le cas de SCP02 ou SCP03 illustré sur la **Figure 5A****.** Il s'agit de la réception de la première commande (par exemple STORE DATA) sécurisée dans l'exemple de la **Figure 5B****.** C'est l'étape 706.

Lorsqu'une telle commande est reçue, les étapes 708 et 710 consistent à vérifier que le compteur d'essais et le nombre maximal d'essais ne sont pas tous les deux à 0, auquel cas aucun canal sécurisé ne peut être établi (étape 712) et le procédé se termine.

Dans le cas général, le nombre maximal d'essais n'est pas nul. Ainsi, tant que le compteur d'essais (dans un mode où il est décrémenté) n'est pas nul (sortie « non » du test 708), le compteur d'essais est décrémenté à l'étape 714, suivie de l'étape 716 consistant à mettre à jour les variables dynamiques nécessaires au canal sécurisé, c'est-à-dire à calculer une valeur de mise à jour de la ou les variables dynamiques (notamment le compteur de séquence) à partir d'une valeur courante de la ou les variables dynamiques stockées en mémoire non volatile. La ou les valeurs de mise à jour de ces variables dynamiques sont alors stockées en mémoire volatile, assurant que leurs valeurs courantes demeurent inchangées, et donc adaptées à un rejeu du même lot de commandes.

Le dispositif esclave 14 traite alors la commande reçue de façon conventionnelle, ainsi que les commandes sécurisées subséquentes telles que reçues du dispositif tiers 16. Ces opérations sur le canal sécurisé sont représentées schématiquement par l'étape 718, et sont décrites plus haut en référence aux **Figures 5** à **5B****.**

L'exécution des commandes sécurisées du lot courant conduit à deux situations principales, et une situation traitée de façon particulière ici.

Comme représenté sur la figure à l'étape 720, il est déterminé si l'exécution du lot de commandes sécurisées s'est bien déroulé (sortie « normal » au test 720) ou si un événement imprévu s'est produit (sortie « inattendu » au test 720).

Un tel événement peut correspondre à une erreur de transmission d'une commande sécurisée du lot (erreur détectable au travers du code MAC accompagnant la commande). Dans ce cas, le canal sécurisé est fermé par l'envoi d'un message d'erreur au dispositif tiers 16 (étape 722), avant que le dispositif esclave 14 se remette en attente d'une nouvelle commande pour un nouveau canal sécurisé.

L'exécution « normale » du lot de commandes sécurisées se produit lorsque le dispositif esclave 14 a reçu l'ensemble des commandes sécurisées, avec des codes d'authentification MAC valides. La dernière commande peut notamment comprendre une indication de fin de commandes sécurisées (un drapeau binaire peut être prévu à cet effet dans la commande ; le champ P1 peut indiquer que les commandes suivantes ne sont plus sécurisées), permettant au dispositif esclave 14 de détecter la fin des commandes sécurisées. Tout autre moyen pour le dispositif esclave 14 d'identifier la dernière commande sécurisée peut être prévu.

L'exécution normale de l'ensemble des commandes sécurisées constitue un événement de sortie de la boucle de rejeu, conduisant à la fermeture du canal sécurisé. Dans ce cas, le dispositif esclave 14 enregistre la valeur de mise à jour calculée (qui est en mémoire volatile à ce moment là, du fait de l'étape 716), en mémoire non volatile comme nouvelle valeur courante de la variable dynamique, typiquement le compteur de séquences. L'ancienne valeur courante est donc écrasée par la valeur de mise à jour calculée. Il s'agit de l'étape 724.

Généralement, l'ensemble des commandes du lot (après l'EXTERNAL AUTHENICATE) sont sécurisées. Ainsi, l'exécution avec succès de l'ensemble des commandes sécurisées correspond à l'exécution avec succès du lot de commandes.

Un autre exemple correspond au cas où le niveau de sécurité défini dans le paramètre P1 de la commande EXTERNAL AUTHENTICATE indique « *No Secure Messaging Expected* », c'est-à-dire une valeur « 0 » (voir section 7.1.2 de GlobalPlatform). Dans ce cas, seule la commande EXTERNAL AUTHENTICATE est sécurisée (les suivantes ne le sont pas). L'invention permet donc le rejeu du lot de commandes uniquement lorsqu'un événement inattendu se réalise pour cette commande EXTERNAL AUTHENICATE, se limitant en fait au rejeu de la seule commande protégée, à savoir l'EXTERNAL AUTHENICATE.

Suite à la validation (commitment) de la nouvelle valeur courante du compteur de séquences (étape 724), le compteur d'essais est réinitialisé à la valeur par défaut, « 10 » dans l'exemple précédent, lors d'une étape 726.

Puis, à l'étape 722, le dispositif esclave 14 envoie, au dispositif tiers 16 et en réponse à la dernière commande sécurisée des commandes sécurisées du lot, un message comprenant une indication que l'exécution de toutes les commandes sécurisées du lot s'est réalisée avec succès. C'est par exemple un message d'acquittement en réponse à cette dernière commande du lot courant. Comme indiqué plus haut, la dernière commande sécurisée peut être identifiée comme telle à l'aide d'un indicateur, ou sinon découler de l'occurrence de la commande sécurisée par rapport à un nombre prévu de commandes sécurisées.

La troisième situation correspond à une commande sécurisée du lot, dont le code d'authentification de message est vérifié avec succès (donc la commande sécurisée est intègre et authentique) et qui conduit à une erreur ou exception d'exécution de cette commande. C'est-à-dire que l'exécution de la commande, une fois déchiffrée, échoue. En d'autres termes, cette commande telle que définie et chiffrée par le dispositif maître 12 est erronée, contaminant le lot courant de commandes qui est donc également erroné. C'est par exemple le cas lorsque la commande indique une fonction inexistante sur le dispositif esclave. Alternativement, il peut s'agir d'une commande mal formée, avec des paramètres erronés. Dans ce cas, il n'est pas opportun de procéder à des rejeux de ce lot. Pour éviter ces rejeux, le dispositif esclave 14 peut forcer le dispositif tiers 16 à solliciter à nouveau le dispositif maître 12, en mettant à jour, en mémoire non volatile, la valeur courante du compteur de séquences avec la valeur de mise à jour actuellement stockée en mémoire volatile et/ou en renvoyant un statut d'erreur que le dispositif tiers 16 est capable d'interpréter comme événement de sortie de la boucle de rejeu.

Une telle situation peut également être détectée lors de l'étape 720, conduisant à l'étape 724 pour la mise à jour effective du compteur de séquences en mémoire non volatile, puis à la réinitialisation du compteur d'essais à l'étape 726 et enfin à l'étape 722 où un message est envoyé, au dispositif tiers en réponse à cette commande conduisant à une erreur ou exception d'exécution, le message comprenant une indication de l'erreur ou exception d'exécution en dépit d'un code d'authentification de message vérifié avec succès.

Afin d'éviter une possible désynchronisation du compteur de séquences avec le compteur d'essais (le compteur d'essais est réinitialisé lorsque le compteur de séquences en mémoire non volatile est incrémenté), il est convenu que l'étape consistant à écraser la valeur courante en mémoire non volatile et l'étape consistant à réinitialiser le compteur d'essais sont réalisées en une étape atomique, c'est-à-dire non divisible, pour empêcher toute personne malveillante de détourner le procédé à ce moment.

D'autres événements de sortie conduisant à la mise à jour effective (commitment) du compteur de séquences en mémoire non volatile peuvent être envisagées.

Un autre exemple d'événement de sortie est le cas d'un code MAC de la commande EXTERNAL AUTHENTICATE qui est détecté comme valide alors que le cryptogramme hôte qu'il contient est détecté comme erroné.

De retour aux étapes 708 et 710, si le compteur d'essais indique la valeur « 0 », c'est-à-dire que le compteur d'essais atteint une valeur seuil et le nombre maximum de rejeux est atteint, le dispositif esclave 14 calcule la valeur de mise à jour du compteur de séquences à partir de sa valeur courante stockée en mémoire non volatile ; puis enregistre cette valeur de mise à jour calculée en mémoire non volatile comme nouvelle valeur courante du compteur de séquences (qui est donc écrasée). Il s'agit de l'étape 728.

Le procédé se poursuit alors à l'étape 730 similaire à l'étape 726 pour réinitialiser le compteur d'essais ; puis teste à nouveau la valeur du compteur d'essais à l'étape 708. Cette boucle assure le commitment de la nouvelle valeur courante du compteur de séquences lorsque le nombre maximum de rejeux a été atteint.

Afin d'éviter une possible désynchronisation du compteur de séquences avec le compteur d'essais, l'étape consistant à écraser la valeur courante en mémoire non volatile et l'étape consistant à réinitialiser le compteur d'essais sont réalisées avant l'étape de génération de la clé de session à partir de la valeur de mise à jour calculée. Cette disposition s'applique lorsque l'atteinte du nombre maximal de rejeux est détectée à l'occasion d'une nouvelle première commande indiquant l'établissement d'un canal sécurisé, par exemple une commande INITIALIZE UPDATE (« oui » au test 708). De façon générale, ces étapes sont réalisées en une étape atomique, c'est-à-dire non divisible, pour empêcher toute personne malveillante de détourner le procédé à ce moment.

Le rebouclage sur l'étape 708 permet de traiter le lot courant (toutes les commandes sécurisées du lot) si celui-ci est déjà en ligne avec la nouvelle valeur courante de compteur de séquences. En effet, selon le niveau d'information que retourne le dispositif esclave 14 au dispositif tiers 16, il est possible pour ce dernier d'anticiper l'arrivée au nombre limite d'essais, de sorte que l'obtention d'un lot de commandes mis à jour peut être anticipé. Quoiqu'il en soit, si le lot courant n'est pas encore mis à jour (et est donc obsolète), il le sera à la prochaine itération car le dispositif tiers 16 sera informé de la nouvelle valeur courante de compteur de séquences lors de la réception du message 510 (voir **Figure 5A**) au cours de l'étape 718 suivante.

A noter que dans la mise en oeuvre de la **Figure 5B**, cet échange 510 n'a pas lieu. Comme le compteur de séquences est public, un mécanisme de synchronisation peut prévoir à l'initiative du dispositif tiers ou du dispositif esclave de communiquer au dispositif tiers la valeur courante du compteur de séquences. Par exemple, la valeur courante peut être retournée automatiquement en réponse à chaque première commande d'un lot, ou être sollicitée par une commande GET DATA du dispositif tiers.

Dans l'exemple de la **Figure 7**, on compare la valeur du compteur d'essais avec le nombre maximum de rejeux possibles avant de décrémenter (ou incrémenter) ledit compteur d'essais. Une variante peut consister à inverser l'ordre de ces deux étapes.

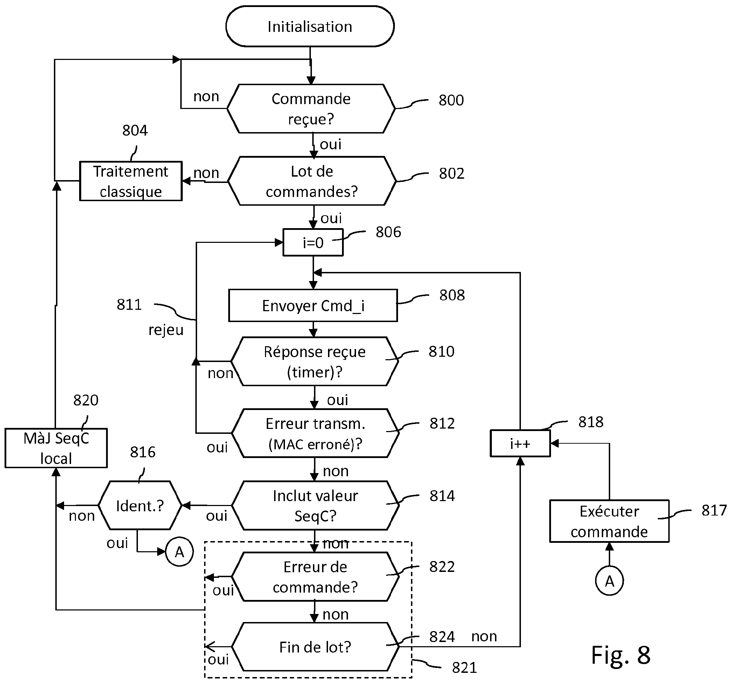

La **Figure 8** illustre, sous forme d'ordinogramme, des étapes générales d'un mode de réalisation de l'invention du côté du dispositif tiers 16.

Après une initialisation, le dispositif tiers 16 est en attente de la réception d'une ou plusieurs commandes de la part du dispositif maître 12. C'est l'étape 800.

A réception, il est déterminé, à l'étape 802, s'il s'agit d'un lot (script ou batch) de commandes pré-généré en mode prédictif. Si ce n'est pas le cas, les commandes sont traitées de façon classique à l'étape 804, avant de retourner en attente d'une nouvelle commande (étape 800).

Sinon, un index « i » est initialisé à 0 à l'étape 806, lequel index permet de sélectionner et traiter de façon séquentielle chacune des commandes du lot reçu.

A l'étape 808, le dispositif tiers 16 envoie la commande « i » au dispositif esclave 14.

Si aucune réponse n'est reçue (test 810), le dispositif tiers 16 considère qu'il y a eu survenance d'un événement imprévu, et procède au rejeu (flèche 811) du lot courant de commandes en retournant à l'étape 806.

Si une réponse est reçue, le dispositif tiers 16 détermine, à l'étape 812, s'il y a eu survenance d'un événement imprévu, par exemple parce que la réponse indique que le code MAC de la commande est erroné (une erreur de transmission a eu lieu). Si tel est le cas, le dispositif tiers 16 procède au rejeu (811) du lot courant de commandes en retournant à l'étape 806.

Si la commande a été reçue correctement par le dispositif esclave 14, le dispositif tiers 16 détermine, à l'étape 814, si la réponse contient une valeur du compteur de séquences du dispositif esclave 14. Une telle information est présente dans la réponse à la première commande INITIALIZE UPDATE comme décrit précédemment en lien avec la **Figure 5****.**

Si la valeur du compteur de séquences du dispositif esclave 14 est indiquée dans la réponse, elle est comparée, à l'étape 816, à une valeur locale que stocke le dispositif tiers 16.

Si les deux valeurs sont identiques, cela signifie que le dispositif esclave 14 n'a pas mis à jour (en mémoire non volatile) son compteur de séquences depuis la dernière itération, c'est-à-dire que le procédé se situe en plein rejeu d'un même lot de commandes. Dans ce cas, on exécute la commande si nécessaire (étape 817) puis on passe à la commande suivante du jeu en incrémentant l'index « i » à l'étape 818, qui reboucle sur l'étape 808.

Si en revanche les deux valeurs sont différentes, cela signifie que le dispositif esclave 14 a mis à jour (en mémoire non volatile) son compteur de séquences depuis la dernière itération (soit par atteinte du nombre maximum de rejeux, soit parce que le dernier lot de commandes a été entièrement traité, soit enfin parce que le dernier lot de commandes était intrinsèquement erroné). Dans ce cas, ladite valeur locale est mise à jour, à l'étape 820, pour prendre la valeur de compteur de séquences reçue. Toujours à l'étape 820, le dispositif tiers 16 prend contact avec le dispositif maître 12 pour éventuellement lui demander un lot de commandes mis à jour avec la nouvelle valeur courante du compteur de séquences.

De retour au test 814, si la réponse reçue ne contient pas de valeur de compteur de séquences (par exemple s'il ne s'agit pas de la réponse à la première commande INITIALIZE UPDATE dans le cas de la **Figure 5A**), le dispositif tiers 16 détermine, à l'étape 821, si la réponse reçue indique un événement de sortie de la boucle de rejeu.

Dans l'exemple de la figure, deux tests sont proposés. Bien entendu, des tests supplémentaires pour détecter d'autres événements de sortie peuvent être mis en oeuvre.

A l'étape 822, le dispositif tiers 16 détermine si la réponse reçue indique une erreur intrinsèque de commande (le statut de réponse prend un code prédéfini), auquel cas la valeur locale de compteur de séquences est mise à jour, à l'étape 820, de façon similaire à une mise à jour par le dispositif esclave 14 (généralement par simple incrément). En effet, cette opération permet de refléter la mise à jour effective 724 du compteur de séquences opérée par le dispositif esclave 14. On garantit ainsi une synchronisation du compteur de séquences entre le dispositif tiers 16 et le dispositif esclave 14.

De même, si la réponse reçue indique que l'ensemble des commandes sécurisées a été entièrement traité avec succès (test 824 - par exemple statut OK en réponse à la dernière commande sécurisée), la valeur locale de compteur de séquences est également mise à jour, à l'étape 820, de façon similaire à une mise à jour par le dispositif esclave 14, pour refléter les changements dans ce dernier dispositif.

Autrement, aucun événement inattendu ou de sortie n'est survenu, conduisant à poursuivre le traitement des autres commandes via l'étape 818.

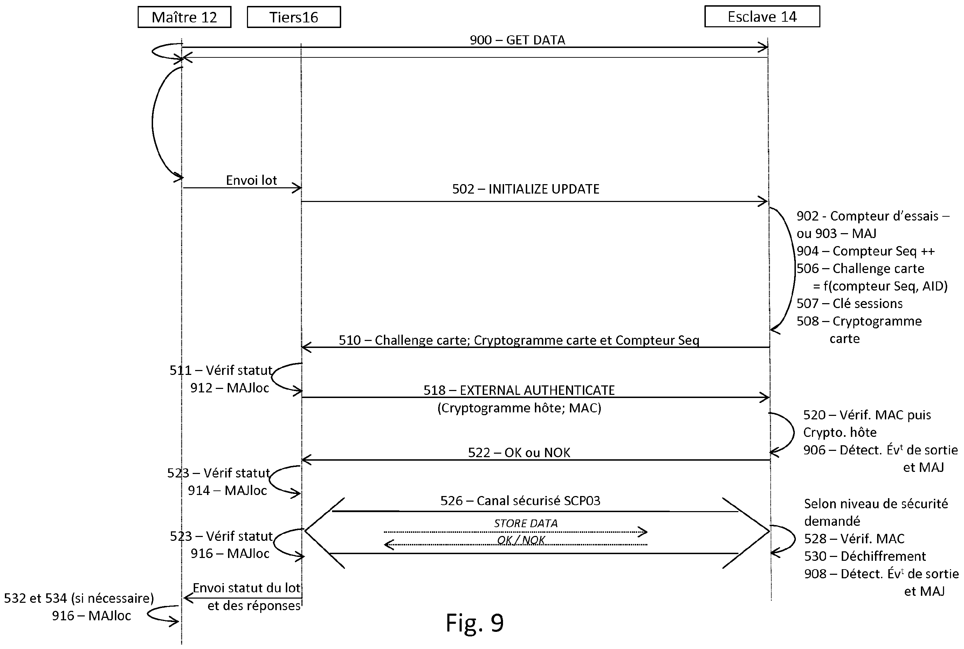

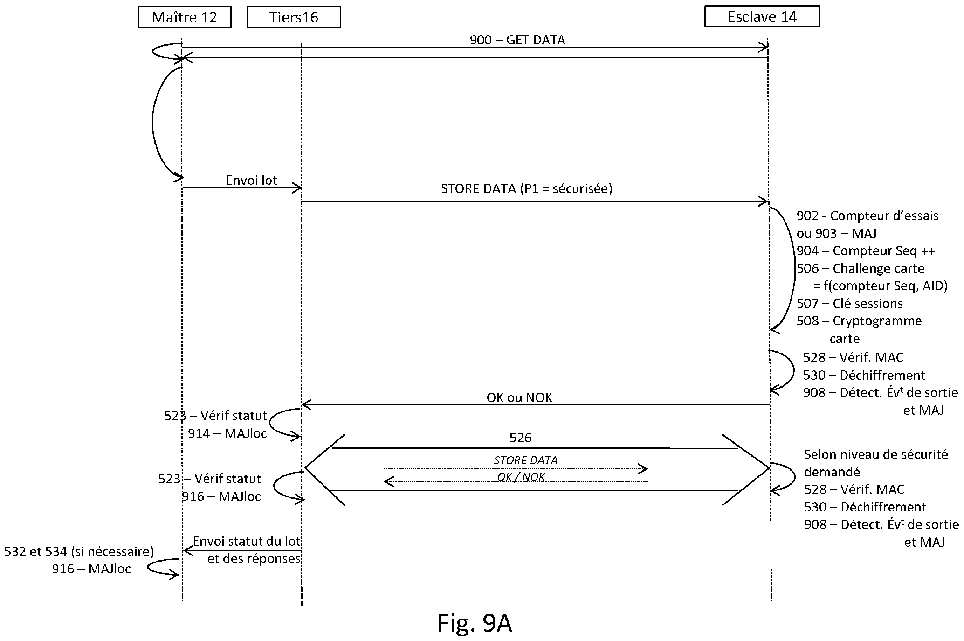

La **Figure 9** illustre, en reprenant le schéma de la **Figure 5A**, des échanges d'un mode de réalisation de l'invention s'appuyant sur le protocole SCP03. Les étapes 5xx demeurent inchangées par rapport à la **Figure 5A**, montrant que la présente invention est compatible avec les protocoles de canal sécurisé existants.

A noter que les explications ci-dessous s'appliquent également au mode prédictif avec le séquencement de la **Figure 5**, ou au mode prédictif sans authentification de la **Figure 5B****.** En outre, elles s'appliquent à d'autres protocoles où une ou plusieurs commandes sécurisées sont transmises dans un canal sécurisé.

Afin de se synchroniser de façon propre avec le dispositif esclave 14, le dispositif maître 12 est capable de récupérer la valeur courante du compteur de séquences (étape 499), depuis le dispositif esclave 14, via le dispositif tiers 16. Par exemple, cette valeur courante peut être demandée à l'aide d'une commande GET DATA (avec un drapeau 9F70), illustrée par les échanges 900 sur la figure.

Le compteur d'essais est décrémenté (étape 714) immédiatement après la réception de la première commande indiquant l'établissement d'un canal sécurisé, ici la commande INITIALIZE UPDATE, comme montré par l'étape 902.

Lorsque ce compteur d'essais atteint le nombre maximum de rejeux possibles, le compteur de séquences est mise à jour en mémoire non volatile (étape 728) et le compteur d'essais est réinitialisé (étape 730). Ces deux étapes, correspondant à l'étape 903, sont illustrées par les lettres « MAJ » sur la figure.

L'étape 904 se distingue de l'étape 504 en ce que la valeur de mise à jour du compteur de séquences est mémorisée en mémoire volatile (et non en mémoire non volatile comme à l'étape 504), afin de permettre un éventuel rejeu du lot courant de commandes.

Les étapes suivantes 506-511, 518, 520 sont identiques à celles de la **Figure 5A**, le dispositif esclave 14 ayant alors vérifié le MAC et le cryptogramme contenus dans la commande EXTERNAL AUTHENTICATE, c'est-à-dire la toute première commande sécurisée par un code MAC.

A l'étape 906 terminant le traitement de la commande EXTERNAL AUTHENTICATE, le dispositif esclave 14 détermine si un événement de sortie de la boucle de rejeu s'est produit. Ces événements sont notamment prédéfinis.

En cas d'événement de sortie de la boucle de rejeu, le dispositif esclave 14 met à jour le compteur de séquences en mémoire non volatile (étape 724), et réinitialise le compteur d'essais (étape 730) [« MAJ » de l'étape 906].

Un événement de sortie de la boucle de rejeu est par exemple une vérification négative du cryptogramme hôte de la commande EXTERNAL AUTHENTICATE.

Optionnellement (notamment si la commande EXTERNAL AUTHENTICATE indique que des commandes suivantes sont sécurisées), un événement de sortie de la boucle de rejeu peut être la détection d'un MAC erroné de la commande EXTERNAL AUTHENTICATE. Toutefois, généralement, un MAC erroné (qui conduit à la fermeture du canal sécurisé), et donc incluant celui de la commande EXTERNAL AUTHENTICATE, sera considéré comme représentatif d'un événement inattendu, lequel permet un rejeu du lot de commandes.

La réponse 522 négative (NOK) peut alors comprendre (dans le paramètre optionnel SW) un code d'erreur qui est différent s'il s'agit d'un événement de sortie conduisant à la mise à jour de la valeur courante du compteur de séquences ou d'un événement inattendu permettant le rejeu. Ces codes d'erreur sont connus du dispositif tiers 16.

Puis chacune des commandes sécurisées ultérieures du lot de commandes est traitée (526), traitement impliquant, pour le dispositif esclave 14 de vérifier le code MAC (528), de déchiffrer et exécuter la commande (530) et de déterminer si un événement de sortie de la boucle de rejeu s'est produit, auquel cas une mise à jour de la valeur courante du compteur de séquences en mémoire non volatile et une réinitialisation du compteur d'essais sont effectuées [« MAJ » de l'étape 908].

Un code MAC erroné conduit à la fermeture du canal de communication. Il est considéré comme un événement inattendu permettant le rejeu, car cette erreur de code MAC peut simplement résulter d'une erreur de transmission, et non d'une erreur dans le lot de commandes à transmettre.

Un événement de sortie de la boucle de rejeu est par exemple une erreur d'exécution d'une commande sécurisée disposant d'un code MAC valide. Dans ce cas en effet, la commande sécurisée est intrinsèquement erronée, un rejeu ne permettant pas de résoudre la source de l'erreur (par exemple un paramètre erroné ou manquant dans la commande). La réponse négative renvoyée (NOK) peut alors comprendre (dans le paramètre optionnel SW) un code d'erreur qui est différent s'il s'agit d'un événement de sortie conduisant à la mise à jour de la valeur courante du compteur de séquences ou d'un événement inattendu permettant le rejeu. Ces codes d'erreur sont connus du dispositif tiers 16.

Un autre événement de sortie de la boucle de rejeu est simplement la bonne exécution de la dernière commande sécurisée du lot courant. Une telle « dernière commande » peut être directement indiquée à l'aide d'un drapeau approprié, ou peut être implicite, par exemple lorsqu'une commande initiale indique le nombre de commandes sécurisées à venir. De façon correspondante, le dispositif tiers 16 reçoit les statuts de réponse du dispositif esclave 14, lui permettant de déterminer si un événement inattendu ou un événement de sortie de la boucle de rejeu est survenu sur le dispositif esclave 14.

La détection d'un événement de sortie conduit à la mise à jour, par le dispositif tiers 16, de son compteur local de séquences (« MAJIoc » sur la figure).

Notamment, grâce aux réponses renvoyées par le dispositif esclave 14, le dispositif tiers 16 détecte lorsqu'il reçoit une valeur de compteur de séquences différente de la valeur localement stockée (voir 912), un code d'erreur du cryptogramme hôte (voir 914), un message indiquant une erreur d'exécution d'une commande au code MAC valide (voir 916) ou un message de succès pour la dernière commande sécurisée du lot (voir 916 également).

La **Figure 9A** illustre les mêmes explications en l'absence de procédure d'authentification (**Figure 5B**), c'est-à-dire lorsque la première commande indiquant l'établissement d'un canal sécurisé est elle-même une commande sécurisée (**Figure 1B**).

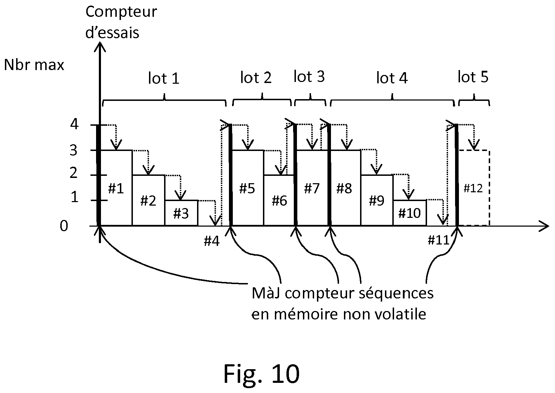

La **Figure 10** illustre l'effet de temporisation de la mise à jour effective en mémoire non volatile du compteur de séquences. L'exemple de la figure s'appuie sur un nombre maximal de rejeux égal à 4, et illustre l'exécution de cinq lots de commandes sécurisées.

Le compteur d'essais, initialement à 4, est décrémenté à 3 lors du premier essai de jeu pour le premier lot de commandes, au cours duquel une valeur de mise à jour du compteur de séquences est stockée en mémoire volatile. Ce premier jeu (#1) est un échec (quelle que soit la raison), conduisant au rejeu du lot courant.

Le compteur d'essais est alors décrémenté à 2, mais ce deuxième jeu (#2) du lot est encore un échec (la même valeur de mise à jour du compteur de séquences est stockée en mémoire volatile). Le compteur d'essais est alors décrémenté à 1, mais ce troisième jeu (#3) du lot est encore un échec. Le compteur d'essais est alors décrémenté à 0, mais ce quatrième jeu (#4) du lot est encore un échec.

A détection du compteur d'essais à 0, le compteur de séquences est mis à jour en mémoire non volatile, rendant le lot courant de commandes obsolète. Le dispositif tiers 16 obtient un nouveau lot de commandes (éventuellement les mêmes commandes, chiffrées différemment). Le compteur d'essais est également réinitialisé à 4.

Le compteur d'essais est alors décrémenté à 3, mais le premier jeu (#5) du nouveau lot est un échec (une nouvelle valeur de mise à jour du compteur de séquences est stockée en mémoire volatile). Le compteur d'essais est alors décrémenté à 2. Le deuxième jeu (#6) du nouveau lot est ici un succès, conduisant à mettre à jour le compteur de séquences en mémoire non volatile. Le dispositif tiers 16 obtient un troisième et nouveau lot de commandes. Le compteur d'essais est réinitialisé à 4.

Le compteur d'essais est alors décrémenté à 3. Le premier jeu (#7) du nouveau lot est ici un succès, conduisant à mettre à jour le compteur de séquences en mémoire non volatile. Le dispositif tiers 16 obtient un quatrième et nouveau lot de commandes. Le compteur d'essais est réinitialisé à 4.

Le compteur d'essais est alors décrémenté à 3, mais le premier jeu (#8) du nouveau lot est un échec. Le compteur d'essais est alors décrémenté à 2, mais le deuxième jeu (#9) du nouveau lot est un échec. Le compteur d'essais est alors décrémenté à 1, mais le troisième jeu (#10) du nouveau lot est un échec. Le compteur d'essais est alors décrémenté à 0, mais le quatrième et dernier jeu (#11) du nouveau lot est encore un échec.

A détection du compteur d'essais à 0, le compteur de séquences est mis à jour en mémoire non volatile, rendant le nouveau lot courant de commandes obsolète. Le dispositif tiers 16 obtient un nouveau lot de commandes (éventuellement les mêmes commandes, chiffrées différemment). Le compteur d'essais est réinitialisé à 4.

Le procédé se poursuit de la même façon, avec la décrémentation du compteur d'essais à 3 et avec le premier jeu (#12) du nouveau lot.

Les exemples qui précèdent ne sont que des modes de réalisation de l'invention qui ne s'y limite pas.

En particulier, les exemples ci-dessus montrent un rejeu complet d'un lot de commandes, c'est-à-dire que la première commande du rejeu est le première commande indiquant l'établissement du canal sécurisé, soit INITIALIZE UPDATE dans certaines modes de SCP02 ou SCP03. Or l'invention s'applique également lorsque la première commande est une commande sécurisée indiquant l'établissement d'un canal sécurisé (voir **Figure 9A**). Ainsi, en variante, il peut être prévu d'effectuer des rejeux à partir d'un point de restauration prévu dans le script de commandes, c'est-à-dire à partir d'une commande sécurisée prédéfinie (plusieurs commandes sécurisées formant points de restauration peuvent être prévues dans le lot).

Par exemple, certaines commandes sécurisées peuvent être indiquées, par le dispositif maître, comme des commandes « point de restauration », par exemple toutes les 10 commandes. Cette indication peut être prévue sous forme de drapeau binaire dans l'entête non chiffrée des commandes, afin que le dispositif tiers 16 puisse être capable de l'interpréter.

Cette indication est traitée de façon similaire par le dispositif tiers 16 et le dispositif esclave 14, à savoir par la mémorisation d'un contexte courant lorsque cette commande « marquée » est exécutée (le dispositif tiers reçoit un acquittement). Le contexte courant contient notamment le numéro « i » de la commande « point de restauration », les clés de session, une copie de la dernière commande et de la dernière réponse (incluant leurs codes MAC et un ou des compteurs CBC) afin de permettre un déchiffrement/chiffrement des commandes/réponses suivantes.

Ainsi, lorsqu'un événement inattendu se produit (coupure d'alimentation, code MAC erroné), les dispositifs effectuent un nouveau jeu du lot de commandes à partir de la dernière commande « point de restauration » mémorisée dans le contexte sauvegardé.

Il est à noter que si le dispositif esclave n'est pas au courant de cet événement inattendu (par exemple non réception d'une commande), la prochaine commande qu'il reçoit du dispositif tiers est la commande « point de restauration », conduisant donc à une vérification erronée du code MAC de cette commande. Les deux dispositifs repartent alors sur un nouveau rejeu du lot à partir de cette commande « point de restauration », assurant une resynchronisation efficace.

## Revendications

1. Procédé de communication comprenant, au niveau d'un dispositif esclave (14), les étapes suivantes :
recevoir (502), d'un dispositif tiers (16), une commande, dite première commande, d'un lot de commandes, ladite première commande indiquant l'établissement d'un canal de communication sécurisé par au moins une clé de session ;
calculer (904) une valeur de mise à jour d'une variable dynamique à partir d'une valeur courante de la variable dynamique stockée en mémoire non volatile ; et
générer (506) la clé de session à partir de la valeur de mise à jour calculée ;
puis recevoir (518, 526), du dispositif tiers et sur le canal de communication sécurisé, au moins une autre commande du lot de commandes, dite deuxième commande, sécurisée par un code d'authentification de message ; et
comprenant en outre, au niveau du dispositif esclave (14), les étapes suivantes :
vérifier le code d'authentification de message à l'aide de la clé de session avant d'exécuter ladite deuxième commande ;
incrémenter (902) un compteur d'essais à réception de la première commande indiquant l'établissement d'un canal de communication sécurisé ; et
écraser (724, 728, 903, 906, 908) la valeur courante de la variable dynamique en mémoire non volatile avec la valeur de mise à jour calculée lorsque le compteur d'essais atteint une valeur seuil.

2. Procédé selon la revendication 1, dans lequel l'étape de calcul d'une valeur de mise à jour (904) comprend l'enregistrement de la valeur de mise à jour calculée dans une mémoire volatile du dispositif esclave.

3. Procédé selon la revendication 1 ou 2, dans lequel la valeur courante de la variable dynamique en mémoire non volatile est écrasée (908) en mémoire non volatile avec la valeur de mise à jour calculée lorsque la dernière commande sécurisée de l'ensemble des deuxièmes commandes sécurisées comprend un code d'authentification de message valablement vérifié et est exécutée avec succès.

4. Procédé selon la revendication 3, comprenant en outre, l'étape suivante : transmettre, au dispositif tiers et en réponse à ladite dernière commande sécurisée, un message comprenant une indication que l'exécution de ladite ou desdites deuxièmes commandes du lot s'est réalisée avec succès.

5. Procédé selon l'une des revendications 1 à 4, dans lequel la valeur courante de la variable dynamique en mémoire non volatile est écrasée (908) en mémoire non volatile avec la valeur de mise à jour calculée lorsque une dite deuxième commande dont le code d'authentification de message a été vérifié avec succès conduit à une erreur ou exception d'exécution de cette deuxième commande.

6. Procédé selon la revendication 5, comprenant en outre, l'étape suivante : transmettre, au dispositif tiers et en réponse à ladite deuxième commande conduisant à une erreur ou exception d'exécution, un message comprenant une indication de l'erreur ou exception d'exécution en dépit d'un code d'authentification de message vérifié avec succès.

7. Procédé selon l'une des revendications 1 à 6, dans lequel le compteur d'essais est réinitialisé (726, 730, 903, 906, 908) à une valeur par défaut lorsque la valeur courante de la variable dynamique en mémoire non volatile est écrasée avec la valeur de mise à jour calculée.

8. Procédé selon la revendication 7, dans lequel l'étape consistant à écraser la valeur courante en mémoire non volatile avec la valeur de mise à jour calculée (726, 903) et l'étape consistant à réinitialiser le compteur d'essai (730, 903) sont réalisées avant l'étape de génération (506) de la clé de session à partir de la valeur de mise à jour calculée.

9. Procédé selon la revendication 7, dans lequel l'étape consistant à écraser la valeur courante en mémoire non volatile avec la valeur de mise à jour calculée (724, 728, 903, 906, 908) et l'étape consistant à réinitialiser le compteur d'essais (726, 730, 903, 906, 908) sont réalisées en une étape atomique.

10. Procédé selon l'une des revendications 1 à 6, dans lequel ladite première commande est une dite deuxième commande sécurisée par un code d'authentification de message.

11. Procédé de communication comprenant, au niveau d'un dispositif tiers (16), les étapes suivantes :
recevoir (800), d'un dispositif maître (12), un lot de commandes à envoyer à un dispositif esclave (14), le lot de commandes incluant une commande, dite première commande (502), indiquant l'établissement, avec le dispositif esclave, d'un canal de communication sécurisé par au moins une clé de session dépendante d'une valeur courante d'une variable dynamique partagée entre le dispositif maître et le dispositif esclave, et au moins une autre commande (518, 526), dite deuxième commande, sécurisée par un code d'authentification de message calculé à l'aide de la clé de session ;
jouer (808) le lot de commandes de sorte à envoyer, au dispositif esclave, les commandes du lot de façon séquentielle, commande par commande, tant qu'aucune erreur n'est détectée ;
comprenant en outre, au niveau du dispositif tiers (16), l'étape suivante :
rejouer (811) le lot de commandes tant que le dispositif tiers ne reçoit pas, du dispositif esclave (14), une indication d'une mise à jour de la valeur courante de la variable dynamique par le dispositif esclave.

12. Procédé selon la revendication 11, dans lequel recevoir l'indication de mise à jour de la variable dynamique par le dispositif esclave comprend recevoir (510, 814), du dispositif esclave (14), une valeur courante de la variable dynamique et comparer (816) la valeur courante reçue avec une valeur locale de la variable dynamique.

13. Procédé selon la revendication 12, dans lequel la valeur courante de la variable dynamique est reçue, par le dispositif tiers (16), dans une réponse (510) du dispositif esclave (14) à la première commande (502).

14. Procédé selon la revendication 11, dans lequel recevoir l'indication d'une mise à jour de la variable dynamique par le dispositif esclave comprend recevoir (522), du dispositif esclave (14), un message d'erreur en réponse à une dite deuxième commande (518) immédiatement subséquente à la première commande (502), le message d'erreur indiquant un code d'authentification de message erroné de ladite deuxième commande immédiatement subséquente à la première commande.

15. Procédé selon l'une des revendications 11 à 14, dans lequel l'indication d'une mise à jour de la valeur courante comprend une indication que l'exécution de ladite ou desdites deuxièmes commandes du lot par le dispositif esclave s'est réalisée avec succès.

16. Procédé selon l'une des revendications 11 à 15, dans lequel l'indication d'une mise à jour de la valeur courante comprend une indication que l'exécution, par le dispositif esclave (14), d'une deuxième commande du lot dont le code d'authentification de message a été vérifié avec succès a conduit à une erreur de cette deuxième commande.

17. Procédé selon l'une des revendications 1 à 16, dans lequel les codes d'authentification de message de plusieurs deuxièmes commandes sont chaînés.

18. Dispositif de traitement (14) comprenant une mémoire non volatile mémorisant une valeur courante d'une variable dynamique, et un processeur configuré pour :
recevoir, d'un dispositif tiers (16), au moins une commande, dite première commande, d'un lot de commandes, ladite première commande indiquant l'établissement d'un canal de communication sécurisé par au moins une clé de session ;
calculer une valeur de mise à jour de la variable dynamique à partir de la valeur courante stockée en mémoire non volatile ; et
générer la clé de session à partir de la valeur de mise à jour calculée ;
puis recevoir, du dispositif tiers et sur le canal de communication sécurisé, au moins une autre commande du lot de commandes, dite deuxième commande, sécurisée par un code d'authentification de message ; et
le dispositif de traitement comprenant en outre un compteur d'essais, et le processeur est configuré en outre pour :
vérifier le code d'authentification de message à l'aide de la clé de session avant d'exécuter ladite deuxième commande ;
incrémenter le compteur d'essais à réception de la première commande indiquant l'établissement d'un canal de communication sécurisé ; et
écraser la valeur courante de la variable dynamique en mémoire non volatile avec la valeur de mise à jour calculée lorsque le compteur d'essais atteint une valeur seuil.

19. Dispositif de traitement (16) comprenant un processeur configuré pour :
recevoir, d'un dispositif maître (12), un lot de commandes à envoyer à un dispositif esclave (14), le lot de commandes incluant une commande, dite première commande, indiquant l'établissement, avec le dispositif esclave, d'un canal de communication sécurisé par au moins une clé de session dépendante d'une valeur courante d'une variable dynamique partagée entre le dispositif maître et le dispositif esclave, et au moins une autre commande, dite deuxième commande, sécurisée par un code d'authentification de message calculé à l'aide de la clé de session ;
jouer le lot de commandes de sorte à envoyer, au dispositif esclave, lesdites commandes du lot de façon séquentielle, commande par commande, tant qu'aucune erreur n'est détectée ;
le processus étant configuré en outre pour : rejouer le lot de commandes tant que le dispositif de traitement ne reçoit pas, du dispositif esclave, une indication d'une mise à jour de la valeur courante de la variable dynamique par le dispositif esclave.

20. Système (10) comprenant un dispositif esclave (14) selon la revendication 18, un dispositif tiers (16) selon la revendication 19, et un dispositif maître (12) configuré pour générer et envoyer le lot de commandes au dispositif tiers (16).

21. Produit programme d'ordinateur comprenant des instructions adaptées à la mise en oeuvre de chacune des étapes du procédé selon l'une quelconque des revendications 1 à 17, lorsque ledit programme est exécuté sur un ordinateur.

## Patentansprüche

1. Kommunikationsverfahren, das an einer Slave-Vorrichtung (14) die folgenden Schritte umfasst:
Empfangen (502) eines Befehls von einer Drittvorrichtung (16), der als erster Befehl bezeichnet wird, aus einem Batch von Befehlen, wobei der erste Befehl auf den Aufbau eines Kommunikationskanals hinweist, der durch mindestens einen Sitzungsschlüssel gesichert ist;
Berechnen (904) eines Aktualisierungswerts einer dynamischen Variablen aus einem aktuellen Wert der dynamischen Variablen, die in einem nichtflüchtigen Speicher gespeichert ist; und
Erzeugen (506) des Sitzungsschlüssels aus dem berechneten Aktualisierungswert;
anschließend Empfangen (518, 526) von der Drittvorrichtung und auf dem gesicherten Kommunikationskanal von mindestens einem weiteren Befehl aus dem Batch von Befehlen, der als zweiter Befehl bezeichnet wird und durch einen Nachrichtenauthentifizierungscode gesichert ist; und
das unter anderem an der Slave-Vorrichtung (14) die folgenden Schritte umfasst:
Überprüfen des Nachrichtenauthentifizierungscodes über den Sitzungsschlüssel vor der Ausführung des zweiten Befehls;
Inkrementieren (902) eines Prüfzählers bei Empfang des ersten Befehls, der auf den Aufbau eines gesicherten Kommunikationskanals hinweist; und
Überschreiben (724, 728, 903, 906, 908) des aktuellen Werts der dynamischen Variablen im nichtflüchtigen Speicher mit dem Aktualisierungswert, der berechnet wird, wenn der Prüfzähler einen Schwellenwert erreicht.

2. Verfahren gemäß Anspruch 1, bei dem der Schritt der Berechnung eines Aktualisierungswerts (904) das Speichern des berechneten Aktualisierungswerts in einem flüchtigen Speicher der Slave-Vorrichtung umfasst.

3. Verfahren gemäß Anspruch 1 oder 2, bei dem der aktuelle Wert der dynamischen Variablen im nichtflüchtigen Speicher dann im nichtflüchtigen Speicher mit dem berechneten Aktualisierungswert überschrieben (908) wird, wenn der letzte gesicherte Befehl aller zweiten gesicherten Befehle einen wirksam überprüften Nachrichtenauthentifizierungscode umfasst und erfolgreich ausgeführt wird.

4. Verfahren gemäß Anspruch 3, weiterhin umfassend den folgenden Schritt: Übertragen einer Meldung umfassend einen Hinweis auf die erfolgreiche Ausführung des zweiten Befehls oder der zweiten Befehle aus dem Batch an die Drittvorrichtung und als Antwort auf den letzten gesicherten Befehl.

5. Verfahren gemäß einem der Ansprüche 1 bis 4, bei dem der aktuelle Wert der dynamischen Variablen im nichtflüchtigen Speicher dann im nichtflüchtigen Speicher mit dem Aktualisierungswert überschrieben (908) wird, wenn ein zweiter Befehl, dessen Nachrichtenauthentifizierungscode erfolgreich überprüft wurde, zu einem Fehler oder einer Ausführungsausnahme dieses zweiten Befehls führt.

6. Verfahren gemäß Anspruch 5, das unter anderem den folgenden Schritt umfasst: Übertragen einer Nachricht an die Drittvorrichtung und als Antwort auf den zweiten Befehl, der zu einem Fehler oder einer Ausführungsausnahme geführt hat, die einen Hinweis auf den Fehler oder die Ausführungsausnahme umfasst, zu dem/der es trotz der erfolgreichen Überprüfung eines Nachrichtenauthentifizierungscodes gekommen ist.

7. Verfahren gemäß einem der Ansprüche 1 bis 6, bei dem der Prüfzähler dann auf einen Standardwert reinitialisiert (726, 730, 903, 906, 908) wird, wenn der aktuelle Wert der dynamischen Variablen im nichtflüchtigen Speicher mit dem berechneten Aktualisierungswert überschrieben wird.

8. Verfahren gemäß Anspruch 7, bei dem der Schritt des Überschreibens des aktuellen Werts im nichtflüchtigen Speicher mit dem berechneten Aktualisierungswert (726, 903) und der Schritt der Reinitialisierung des Prüfzählers (730, 903) vor dem Schritt des Erzeugens (506) des Sitzungsschlüssels aus dem berechneten Aktualisierungswert durchgeführt werden.

9. Verfahren gemäß Anspruch 7, bei dem der Schritt des Überschreibens des aktuellen Werts im nichtflüchtigen Speicher mit dem berechneten Aktualisierungswert (724, 728, 903, 906, 908) und der Schritt der Reinitialisierung des Prüfzählers (726, 730, 903, 906, 908) in einem atomaren Schritt durchgeführt werden.

10. Verfahren gemäß einem der Ansprüche 1 bis 6, bei dem es sich bei dem ersten Befehl um einen als zweiten Befehl bezeicheten Befehl handelt, der durch einen Nachrichtenauthentifizierungscode gesichert ist.

11. Kommunikationsverfahren, umfassend an einer Drittvorrichtung (16) die folgenden Schritte:
Empfangen (800) eines Batchs von Befehlen, die an eine Slave-Vorrichtung (14) zu versenden sind, von einer Master-Vorrichtung (12), wobei der Batch von Befehlen einen Befehl umfasst, der als erster Befehl (502) bezeichnet wird, der darauf hinweist, dass mit der Slave-Vorrichtung ein Kommunikationskanal aufgebaut wurde, der durch mindestens einen Sitzungsschlüssel gesichert ist, der von einem aktuellen Wert einer dynamischen Variablen abhängt, die die Master-Vorrichtung und die Slave-Vorrichtung gemeinsam verwenden, und mindestens einen weiteren Befehl (518, 526), der als zweiter Befehl bezeichnet wird, der durch einen Nachrichtenauthentifizierungscode gesichert ist, der über den Sitzungsschlüssel berechnet wird;
Wiedergeben (808) des Batchs von Befehlen in der Form, dass die Befehle des Batchs aufeinander folgend, Befehl für Befehl, an die Slave-Vorrichtung versendet werden, solange kein Fehler festgestellt wird;
das unter anderem an der Drittvorrichtung (16) den folgenden Schritt umfasst:
Wiedergeben (811) des Batchs von Befehlen, solange die Drittvorrichtung von der Slave-Vorrichtung (14) keinen Hinweis auf eine Aktualisierung des aktuellen Werts der dynamischen Variablen durch die Slave-Vorrichtung erhält.

12. Verfahren gemäß Anspruch 11, bei dem das Empfangen des Hinweises auf Aktualisierung der dynamischen Variablen durch die Slave-Vorrichtung das Empfangen (510, 814) eines aktuellen Werts der dynamischen Variablen von der Slave-Vorrichtung (14) und das Vergleichen (816) des empfangenen aktuellen Werts mit einem lokalen Wert der dynamischen Variablen umfasst.

13. Verfahren gemäß Anspruch 12, bei dem der aktuelle Wert der dynamischen Variablen durch die Drittvorrichtung (16) in einer Antwort (510) der Slave-Vorrichtung (14) auf den ersten Befehl (502) empfangen wird.

14. Verfahren gemäß Anspruch 11, bei dem das Empfangen des Hinweises auf eine Aktualisierung der dynamischen Variablen durch die Slave-Vorrichtung das Empfangen (522) einer Fehlernachricht in Antwort auf einen als zweiten Befehl (518) bezeichneten Befehl unmittelbar im Anschluss an den ersten Befehl (502) von der Slave-Vorrichtung (14) umfasst, wobei die Fehlernachricht auf einen falschen Nachrichtenauthentifizierungscode des zweiten Befehls unmittelbar im Anschluss an den ersten Befehl hinweist.

15. Verfahren gemäß einem der Ansprüche 11 bis 14, bei dem der Hinweis auf eine Aktualisierung des aktuellen Werts einen Hinweis umfasst, dass der zweite Befehl oder die zweiten Befehle aus dem Batch durch die Slave-Vorrichtung erfolgreich ausgeführt wurde(n).

16. Verfahren gemäß einem der Ansprüche 11 bis 15, bei dem der Hinweis auf eine Aktualisierung des aktuellen Werts einen Hinweis umfasst, dass die Ausführung eines zweiten Befehls aus dem Batch durch die Slave-Vorrichtung (14), dessen Nachrichtenauthentifizierungscode erfolgreich überprüft wurde, zu einem Fehler dieses zweiten Befehls geführt hat.

17. Verfahren gemäß einem der Ansprüche 1 bis 16, bei dem die Nachrichtenauthentifizierungscodes mehrerer zweiter Befehle verkettet werden.

18. Verarbeitungsvorrichtung (14), umfassend einen nichtflüchtigen Speicher, der einen aktuellen Wert einer dynamischen Variablen abspeichert, und einen Prozessor, der für Folgendes konfiguriert ist:
Empfangen von einer Drittvorrichtung (16) mindestens eines Befehls, der als erster Befehl bezeichnet wird, aus einem Batch von Befehlen, wobei der erste Befehl auf den Aufbau eines Kommunikationskanals hinweist, der durch mindestens einen Sitzungsschlüssel gesichert ist;
Berechnen eines Aktualisierungswerts der dynamischen Variablen aus dem aktuellen Wert, der in einem nichtflüchtigen Speicher gespeichert ist; und
Erzeugen des Sitzungsschlüssels aus dem berechneten Aktualisierungswert;
anschließend Empfangen von der Drittvorrichtung und auf dem gesicherten Kommunikationskanal von mindestens einem weiteren Befehl aus dem Batch von Befehlen, der als zweiter Befehl bezeichnet wird und durch einen Nachrichtenauthentifizierungscode gesichert ist; und wobei die Verarbeitungsvorrichtung weiterhin einen Prüfzähler umfasst und der Prozessor unter anderem konfiguriert ist, um:
den Nachrichtenauthentifizierungscode vor der Ausführung des zweiten Befehls über den Sitzungsschlüssel zu überprüfen;
den Prüfzähler bei Empfang des ersten Befehls, der auf die Wiederherstellung eines gesicherten Kommunikationskanals hinweist, zu inkrementieren; und
den aktuellen Wert der dynamischen Variablen im nichtflüchtigen Speicher mit dem Aktualisierungswert zu überschreiben, der berechnet wird, wenn der Prüfzähler einen Schwellenwert erreicht.

19. Verarbeitungsvorrichtung (16), umfassend einen Prozessor, der konfiguriert ist, um:
von einer Master-Vorrichtung (12) einen Batch von Befehlen zu empfangen, die an eine Slave-Vorrichtung (14) zu versenden sind, wobei der Batch aus Befehlen einen Befehl umfasst, der als erster Befehl bezeichnet wird und darauf hinweist, dass mit der Slave-Vorrichtung ein Kommunikationskanal aufgebaut wurde, der mindestens durch einen Sitzungsschlüssel gesichert ist, der von einem aktuellen Wert einer dynamischen Variablen abhängt, die die Master-Vorrichtung und die Slave-Vorrichtung gemeinsam verwenden, sowie mindestens einen weiteren Befehl, der als zweiter Befehl bezeichnet wird, der durch einen Nachrichtenauthentifizierungscode gesichert ist, der über den Sitzungsschlüssel berechnet wird;
den Batch von Befehlen in der Form wiederzugeben, dass die Befehle des Batchs aufeinander folgend, Befehl für Befehl, an die Slave-Vorrichtung versendet werden, solange kein Fehler festgestellt wird;
wobei der Prozess unter anderem konfiguriert ist, um: den Batch von Befehlen wiederzugeben, solange die Verarbeitungsvorrichtung von der Slave-Vorrichtung keinen Hinweis auf eine Aktualisierung des aktuellen Werts der dynamischen Variablen durch die Slave-Vorrichtung erhält.

20. System (10), umfassend eine Slave-Vorrichtung (14) gemäß Anspruch 18, eine Drittvorrichtung (16) gemäß Anspruch 19 sowie eine Master-Vorrichtung (12), die konfiguriert ist, um den Batch von Befehlen zu erzeugen und an die Drittvorrichtung (16) zu versenden.

21. Computerprogrammprodukt, umfassend Anweisungen, die an die Umsetzung der einzelnen Schritte des Verfahrens gemäß einem der Ansprüche 1 bis 17 angepasst sind, wenn das Programm auf einem Computer ausgeführt wird.

## Claims

1. Communication method comprising, on a slave device (14), the following steps:
receiving (502), from a third-party device (16), a command, called first command, from a batch of commands, said first command indicating the establishment of a communication channel secured by at least one session key;
computing (904) an update value of a dynamic variable from a current value of the dynamic variable stored in non-volatile memory; and
generating (506) the session key from the computed update value;
then receiving (518, 526), from the third-party device and on the secure communication channel, at least one other command from the batch of commands, called second command, secured by a message authentication code; and
further comprising, on the slave device (14), the following steps:
checking the message authentication code using the session key before executing said second command;
incrementing (902) a test counter on reception of the first command indicating the establishment of a secure communication channel; and
overwriting (724, 728, 903, 906, 908) the current value of the dynamic variable in non-volatile memory with the computed update value when the test counter reaches a threshold value.

2. Method according to claim 1, in which the step of computation (904) of an update value comprises the storage of the computed update value in a volatile memory of the slave device.

3. Method according to claim 1 or 2, in which the current value of the dynamic variable in non-volatile memory is overwritten (908) in non-volatile memory with the computed update value when the last secure command of all of the second secure commands comprises a validly checked message authentication code and is executed successfully.

4. Method according to claim 3, further comprising the following step: transmitting, to the third-party device and in response to said last secure command, a message comprising an indication that the execution of said second command or commands of the batch has been carried out successfully.

5. Method according to one of claims 1 to 4, in which the current value of the dynamic variable in non-volatile memory is overwritten (908) in non-volatile memory with the computed update value when one said second command whose message authentication code has been checked successfully leads to an error or exception in execution of this second command.

6. Method according to claim 5, further comprising the following step: transmitting, to the third-party device and in response to said second command leading to an execution error or exception, a message comprising an indication of the execution error or exception despite a successfully checked message authentication code.

7. Method according to one of claims 1 to 6, in which the test counter is reset (726, 730, 903, 906, 908) to a default value when the current value of the dynamic variable in non-volatile memory is overwritten with the computed update value.

8. Method according to claim 7, in which the step consisting in overwriting the current value in non-volatile memory with the computed update value (726, 903) and the step consisting in resetting the test counter (730, 903) are performed before the step of generation (506) of the session key from the computed update value.

9. Method according to claim 7, in which the step consisting in overwriting the current value in non-volatile memory with the computed update value (724, 728, 903, 906, 908) and the step consisting in resetting the test counter (726, 730, 903, 906, 908) are performed in an atomic step.

10. Method according to one of claims 1 to 6, in which said first command is one said second command secured by a message authentication code.

11. Communication method comprising, on a third-party device (16), the following steps:
Receiving (800), from a master device (12), a batch of commands to be sent to a slave device (14), the batch of commands including a command, called first command (502), indicating the establishment, with the slave device, of a communication channel secured by at least one session key dependent on a current value of a dynamic variable shared between the master device and the slave device, and at least one other command (518, 526), called second command, secured by a message authentication code computed using the session key;
playing (808) the batch of commands so as to send, to the slave device, the commands of the batch sequentially, command by command, as long as no error is detected;
further comprising, on the third-party device (16), the following step:
replaying (811) the batch of commands as long as the third-party device does not receive, from the slave device (14), an indication of an update of the current value of the dynamic variable by the slave device.

12. Method according to claim 11, in which receiving the indication of update of the dynamic variable by the slave device comprises receiving (510, 814), from the slave device (14), a current value of the dynamic variable and comparing (816) the received current value with a local value of the dynamic variable.

13. Method according to claim 12, in which the current value of the dynamic variable is received, by the third-party device (16), in a response (516) from the slave device (14) to the first command (502).

14. Method according to claim 11, in which receiving the indication of an update of the dynamic variable by the slave device comprises receiving (522), from the slave device (14), an error message in response to one said second command (518) immediately subsequent to the first command (502), the error message indicating an incorrect message authentication code for said second command immediately subsequent to the first command.

15. Method according to one of claims 11 to 14, in which the indication of an update of the current value comprises an indication that the execution of said second command or commands of the batch by the slave device has been carried out successfully.

16. Method according to one of claims 11 to 15, in which the indication of an update of the current value comprises an indication that the execution, by the slave device (14), of a second command of the batch whose message authentication code has been checked successfully has led to an error of this second command.

17. Method according to one of claims 1 to 16, in which the message authentication codes of a number of second commands are strung together.

18. Processing device (14) comprising a non-volatile memory storing a current value of a dynamic variable, and a processor configured to:
receive, from a third-party device (16), at least one command, called first command, from a batch of commands, said first command indicating the establishment of a communication channel secured by at least one session key;
computing an update value of the dynamic variable from the current value stored in non-volatile memory; and
generating the session key from the computed update value;
then receiving, from the third-party device and on the secure communication channel, at least one other command from the batch of commands, called second command, secured by a message authentication code; and
the processing device further comprising a test counter, and the processor is further configured to:
check the message authentication code using the session key before executing said second command;
increment the test counter on reception of the first command indicating the establishment of a secure communication channel; and
overwrite the current value of the dynamic variable in non-volatile memory with the computed update value when the test counter reaches a threshold value.

19. Processing device (16) comprising a processor configured to:
receive, from a master device (12), a batch of commands to be sent to a slave device (14), the batch of commands including a command, called first command, indicating the establishment, with the slave device, of a communication channel secured by at least one session key dependent on a current value of a dynamic variable shared between the master device and the slave device, and at least one other command, called second command, secured by a message authentication code computed using the session key;
playing the batch of commands so as to send, to the slave device, said commands of the batch sequentially, command by command, as long as no error is detected;
the process being further configured to:
replay the batch of commands as long as the processing device does not receive, from the slave device, an indication of an update of the current value of the dynamic variable by the slave device.

20. System (10) comprising a slave device (14) according to claim 18, a third-party device (16) according to claim 19, and a master device (12) configured to generate and send the batch of commands to the third-party device (16).

21. Computer program product comprising instructions suitable for implementing each of the steps of the method according to any one of claims 1 to 17, when said program is run on a computer.
